# EUROPÄISCHE PATENTSCHRIFT

(11) **EP 3 327 679 B1**
(45) Veröffentlichungstag und Bekanntmachung des Hinweises auf die Patenterteilung: **12.03.2025**
(21) Anmeldenummer: 17204418.2
(22) Anmeldetag: 29.11.2017
(51) Int. Cl.: G07C 9/26, G07C 9/00, H04W 12/08, H04W 12/06, H04L 9/32, G06K 19/07

(54) **VERFAHREN ZUR ZUTRITTSKONTROLLE EINER PERSONENGRUPPE MITTELS MEHREREN LESEGERÄTEN UND MEHREREN TOKEN**
METHOD FOR ACCESS CONTROL OF A GROUP OF PERSONS USING MULTIPLE READERS AND MULTIPLE TOKENS
PROCÉDÉ DE CONTRÔLE D'ACCÈS D'UN GROUPE DE PERSONNES AU MOYEN DE PLUSIEURS APPAREILS DE LECTURE ET DE PLUSIEURS JETONS

(30) Priorität: 29.11.2016 DE 102016223684
(43) Veröffentlichungstag der Anmeldung: 30.05.2018
(73) Patentinhaber: Bundesdruckerei GmbH, 10969 Berlin (DE)
(72) Erfinder: SCHOLZE, Steffen, 13469 Berlin (DE); HUHN, Michael, 12105 Berlin (DE)
(74) Vertreter: Richardt Patentanwälte PartG mbB

(56) Entgegenhaltungen:
- EP-A1- 2 424 185
- WO-A1-2016/178081
- WO-A2-2006/014205
- DE-A1- 102014 105 246
- US-A1- 2016 035 163
- "ISO/IEC 9798-2:2008 Information technology -- Security techniques -- Entity authentication -- Part 2: Mechanisms using symmetric encipherment algorithms", INTERNATIONAL STANDARD ISO, XX, XX, vol. 9798-2, 15 December 2008 (2008-12-15), pages 1 - 16, XP009142320

## Beschreibung

Die Erfindung betrifft ein Verfahren zur Zutrittskontrolle einer Personengruppe mittels mehreren Lesegeräten und mehreren Token, sowie entsprechende Lesegeräte und Token zum Ausführen des Verfahrens.

Zutrittskontrollsysteme zur Zutrittskontrolle von geschützten Gebäuden und Anlagen, welche kontrollieren, dass nur Personen, die sich gegenüber dem Zutrittskontrollsystem authentifizieren können, Zutritt erlangen, sind bekannt. Um sich gegenüber einem Zutrittskontrollsystem zu authentifizieren werden oftmals Sicherheitstoken in Form von handlichen Sicherheits- oder ID-Karten verwendet, die beim Zutritt an ein Lesegerät angehalten werden müssen. Ein solches System ist beispielsweise aus EP2624223 A3 bekannt. Damit die Lesegeräte die Token zuordnen können, um ihnen den Zutritt zu gewähren muss der Token durch das Lesegerät identifiziert werden. Um sich zu identifizieren, senden die Token Identifier an die Lesegeräte. Damit können die Lesegeräte die richtigen Schlüssel wählen, um die übertragenen Geheimnisse, welche die Identifier der Token umfassen, richtig zu entschlüsseln.

Die WO 2016/178081 A1 beschreibt Verfahren und Vorrichtungen zum Treffen von Zugriffsentscheidungen in einem gesicherten Zugriffsnetzwerk. Die Zugriffsentscheidungen werden durch eine oder mehrere tragbare Berechtigungsnachweise unter Verwendung von Daten und Algorithmen getroffen, die auf zwei oder mehr Berechtigungsnachweisen gespeichert sind oder von diesen empfangen werden. Da Zugriffsentscheidungen durch den tragbaren Berechtigungsnachweis oder die Berechtigungsnachweise getroffen werden, können nicht vernetzte Hosts oder lokale Hosts verwendet werden, die nicht notwendigerweise mit einer zentralen Zugriffssteuerung oder Datenbank verbunden sein müssen, wodurch die Kosten für den Aufbau und die Wartung des gesicherten Zugriffsnetzwerk reduziert werden .

Die DE 10 2014 105 246 A1 beschreibt eine Verriegelungseinheit für ein Gehäuse, insbesondere für einen Aufnahmebehälter von Gegenständen, mit mindestens zwei Türen zum Verriegeln von jeweiligen Gehäuseöffnungen, insbesondere Aufnahmefächern. Die Verriegelungseinheit weist für jede der Türen jeweils ein Verriegelungselementmodul mit mindestens einem Verriegelungskörper und einem Verriegelungsantrieb zum Betätigen des Verriegelungskörpers auf. Der Verriegelungsantrieb weist für die Verriegelungselementmodule ein gemeinsames Antriebselement auf, welches um einen Verstellweg bewegbar ist sowie in einer ersten Verstellposition den/die Verriegelungskörper für lediglich eine der Türen oder lediglich eine erste Gruppe von Türen der Türen in eine Entriegelungsstellung bringt und in einer zweiten Verstellposition die Verriegelungskörper für alle der Türen in eine Entriegelungsstellung bringt. Offenbart wird ferner ein Gehäuse umfassend eine derartige Verriegelungseinheit, und ein Verfahren zum Entriegeln von ein oder mehreren Türen eines derartigen Gehäuses.

Die US 2016/0035163 A1 beschreibt Verfahren, Systeme und computerlesbare Medien zum Verfolgen von Positionen von Verriegelungsvorrichtungen. Eine Verriegelungsvorrichtung umfasst einen drahtlosen Sendeempfänger, einen Speicher, einen elektronisch steuerbaren Verriegelungsmechanismus, einen Prozessor und eine Positionsbestimmungsschaltung, die dazu konfiguriert ist, um eine Position der elektronischen Verriegelungsvorrichtung zu bestimmen. Der Prozessor ist dazu konfiguriert, ein oder mehrere Positionsdatenelemente zu empfangen, welche die Position der elektronischen Sperrvorrichtung zu einer oder mehreren Zeiten angeben, das eine oder die mehreren Positionsdatenelemente in dem Speicher zu speichern und das eine oder die mehreren Positionsdatenelemente von dem Speicher an ein mobiles Gerät über den drahtlosen Transceiver zu übertragen.

Die der Erfindung zugrundeliegende Aufgabe ist die Schaffung eines verbesserten Verfahrens zur Zutrittskontrolle von mehreren Personen mittels mehreren Lesegeräten und mehreren Authentifizierungsmitteln, genannt Token, wobei jede Person einen Token besitzt. Das Verfahren der Zutrittskontrolle kann vorzugsweise in geschützten oder sensiblen Bereichen, beispielsweise einem Industriegelände, einem Bürogebäude oder einer Fabrik oder ähnlichen Gebieten und Gebäuden mit mehreren Zugängen angewendet werden. Erfindungsgemäß wird die Aufgabe durch das Verfahren nach Anspruch 1, das Lesegerät nach Anspruch 11, den Token nach Anspruch 12 und das System nach Anspruch 13 gelöst.

Vorteilhafter Weise ist das Verfahren nach einer Ausführungsform der Erfindung dazu in der Lage eine Person zu authentifizieren, ohne dabei einen Wert von einem Token an ein Lesegerät zu senden, welcher ausreicht, um ein Token identifizieren zu können.

Im Folgenden werden die Begriffe des Identifizierens und des Authentifizierens verwendet. Ein Identifizieren bezeichnet das Zuordnen einer Identität. So ist die Identifikation des Tokens beispielsweise das Erkennen um welchen Token es sich handelt. Der Prozess der Identifikation ist dabei ein Teil der Authentifikation eines Tokens. Authentifizieren bezeichnet das Erkennen von Eigenschaften, insbesondere von Zutrittsrechten zu einem geschützten Objekt. Das Verfahren gewährt einer Person

Zutritt zu dem zu schützenden Objekt, wenn sich der Token der Person erfolgreich gegenüber einem Lesegerät authentifiziert hat. Die Identifikation ist dazu nötig, die dem Token zugewiesenen Rechte zu überprüfen und gegebenenfalls mit hinterlegten Rechten abzugleichen.

Ferner bezeichnet ein Authentifizierungsversuch den erfolgreichen oder erfolglosen Prozess einer Authentifizierung eines Tokens gegenüber einem Lesegerät. Der Grund für das Scheitern der Authentifizierung kann beispielsweise eine gescheiterte Identifikation und/oder einen anderen nicht näher definierten Grund umfassen.

Das Verfahren wird mittels eines der Lesegeräte durchgeführt, wobei das Lesegerät einen internen Speicher, einen Prozessor, eine Drahtloskommunikationsschnittstelle für eine Drahtloskommunikation mit einem Token, beispielsweise unter Verwendung von Radiofrequenz Identifikation (RFID) oder Nahfeldkommunikation (NFC), und ein Steuermittel zum Steuern von Verriegelungsmitteln, beispielsweise einem Drehkreuz, einem Schloss, einer Schranke, einer Drehtür oder einer Sicherheitstür, umfasst. Des Weiteren wird das Verfahren mittels eines der Token durchgeführt, welcher einen nicht-volatilen, internen Speicher, einen Prozessor und eine Drahtloskommunikationsschnittstelle für die Drahtloskommunikation mit dem Lesegerät umfasst.

Das Steuermittel des Lesegeräts steuert das Verriegelungsmittel an, wenn die Freigabe von dem Lesegerät bezüglich des Tokens erteilt wird. Das Verriegelungsmittel umfasst beispielhaft ein mechanisches Verriegelungsmittel, wie einen Riegel eines Drehkreuzes oder eines Schlosses, oder ein elektronisches Verriegelungsmittel, wie zum Beispiel ein Magnetschloss, eine elektrische Schiebetür, einen Motor einer Drehtür oder einen Kompressor für eine pneumatische Verriegelung einer Drucktür.

Das Verfahren kann beispielsweise Anwendung finden bei der Kontrolle mehrerer Zugänge zu einem Objekt, welches viele Personen innerhalb eines kurzen Zeitraumes betreten und/oder verlassen.

Nach einer Ausführungsform der Erfindung wird das Verfahren in einer Fabrik mit Schichtbetrieb angewandt. Bei jedem Schichtwechsel verlassen und betreten eine Mehrzahl von Personen innerhalb eines kurzen Zeitraumes die Fabrik, wodurch sich schnell Schlangen an den Zutrittspunkten bilden können.

Durch die Verwendung des vorliegenden Verfahrens in einer Fabrik ergeben sich vorteilhafter Weise minimierte Wartezeiten für die einzelnen Personen, welche die Fabrik betreten oder verlassen, wodurch sich die Wahrscheinlichkeit für eine Bildung von Personenschlangen an den Zutrittspunkten der Fabrik minimiert.

Der Token kann dabei als ein tragbares Gerät, beispielsweise eine Smart-Watch, eine Chip- oder eine ID-Karte, ein USB-Stick oder ein Dokument, insbesondere ein Wert- oder Sicherheitsdokument ausgebildet sein. In einer besonders vorteilhaften Ausführungsform der Erfindung ist der Token in einer handlichen Form ausgebildet. Die handliche Form ermöglicht dabei als einer von vielen Faktoren den schnellen Zugang, um möglichst schnell viele Personen zu kontrollieren. Um zu verhindern, dass man den Token regelmäßig aufgrund von leeren Batterien austauschen muss, kann der Token ohne Batterie ausgestattet sein. Der Token empfängt dann seine Betriebsspannung für den Prozessor und den nicht-volatilen, internen Speicher über die Drahtloskommunikationsschnittstelle von dem Lesegerät.

Die Drahtloskommunikation zwischen dem Lesegerät und dem Token kann in Ausführungsformen der Erfindung über Radiowellen (RFID) oder Nahfeldkommunikation (NFC) gemäß ISO 14443 oder Bluetooth erfolgen. Durch Einsatz von RFID bzw. NFC ist in vorteilhafter Weise die Spannungsversorgung des Tokens durch das Lesegerät gewährleistet und dass der Token bei jedem Authentifizierungsversuch unabhängig von einer Batterie einsatzbereit ist.

Nach einer Ausführungsform der Erfindung sind die Lesegeräte an mehreren oder allen Zutrittspunkten des zu kontrollierenden Objekts verteilt angeordnet. Dabei ist es möglich, dass ein oder mehrere Eingänge gleiche oder unterschiedliche Sicherheitsbestimmungen zugeordnet sind. Bereiche mit unterschiedlichen Sicherheitsbestimmungen sind dann Gruppen von Lesegeräten zugeordnet, welche unterschiedliche Zutrittsrechte erfordern.

Die Lesegeräte sind in einer weiteren Ausführungsform der Erfindung mit einer Datenbank kommunikativ verbunden. Die Verbindung kann dabei über das Internet, ein Kabel (LAN) oder eine kabellose Verbindung (WLAN) ausgebildet sein. Bei der Verwendung der kommunikativen Verbindung der Lesegeräte mit der Datenbank kann die Zutrittskontrolle der Token zentral verwaltet werden und die Zutrittsrechte zentral vergeben werden. Auch die Daten, die auf den internen Speichern der Lesegeräte und/oder in den nicht-volatilen, internen Speichern der Token gespeichert sind, können auf der Datenbank gespeichert, insbesondere gespiegelt sein. Dadurch ergibt sich in vorteilhafter Weise einerseits, dass die Verwaltung der Daten zentralisiert und damit vereinfacht wird und andererseits, dass die Daten gesichert sind, falls ein Token und/oder ein Lesegerät beschädigt wird oder aus anderen Gründen nicht mehr auf den jeweiligen internen Speicher zugergriffen werden kann.

Die Lesegeräte umfassen nach einer weiteren Ausführungsform der Erfindung Sensoren zur Erfassung von biometrischen Daten oder ein Eingabegerät für die Eingabe einer persönlichen Identifikationsnummer (PIN).

In Ausführungsformen der Erfindung wird das Verfahren zur Authentifizierung von einem Lesegerät und einem Token durchgeführt und kann in vier Grundschritte unterteilt werden.

### Schritt A:

Senden von Identifikationsmerkmalen des Lesegeräts an den Token.

### Schritt B:

Verschlüsseln eines Geheimnisses und Zurücksenden eines Rückgabewertes vom Token an das Lesegerät.

### Schritt C:

Identifizieren des Tokens durch das Lesegerät anhand des Rückgabewertes.

### Schritt D:

Erteilen oder Verweigern des Zutritts aufgrund von vorhandenen bzw. fehlenden Zutrittsrechten und Ansteuern des Verriegelungsmittels.

Das Verfahren wird eingeleitet, sobald sich der Token innerhalb der Drahtloskommunikationsreichweite des Lesegeräts befindet. Nach Ausführungen der Erfindung kann dies beispielsweise durch positionieren des Tokens innerhalb der Drahtloskommunikationsreichweite des Lesegeräts erfolgen, wobei die typische Reichweite eines beispielhaften RFID-Verfahrens einige Zentimeter bis einige Meter beträgt. Bei einem solchen Verfahren sendet das Lesegerät wiederholt Impulse aus, die, sobald sich ein Token in der Drahtloskommunikationsreichweite des Lesegeräts befindet, von dem Token empfangen werden, wodurch der Token dem übertragenden Feld der Drahtloskommunikation Leistung entnimmt, was durch das Lesegerät registriert wird.

Hat das Lesegerät erkannt, dass sich ein Token in seiner Drahtloskommunikationsreichweite befindet, so erfolgt Schritt A. Das Lesegerät sendet einen ersten Wert und eine das Lesegerät identifizierende Identifikationsnummer (ID) mittels der Drahtloskommunikation über die Drahtloskommunikationsschnittstelle des Lesegeräts. Der Token empfängt den ersten Wert und die ID des Lesegeräts durch die Drahtloskommunikationsschnittstelle des Tokens.

Erfindungsgemäß umfasst der erste Wert eine Zufallszahl Durch die Verwendung einer Zufallszahl ergibt sich vorteilhafterweise eine erhöhte Sicherheit des Verfahrens gegenüber einem Angreifer, welcher versucht mittels "Track & Trace" die Orte der erfolgreichen Authentifizierung eines oder mehrerer bestimmter Token zu ermitteln. Das Ermitteln der Authentifizierungspunkte eines oder mehrerer bestimmten Token wird dem Angreifer dadurch erschwert, dass der Angreifer den ersten Wert, welcher eine Zufallszahl umfasst a priori nicht kennen kann.

Erfindungsgemäß verschlüsselt das Lesegerät den ersten Wert mit einem dem Lesegerät zugeordneten symmetrischen Schlüssel und sendet den so verschlüsselten ersten Wert in Schritt A an den Token.

Durch das Verwenden des dem Lesegerät zugeordneten Schlüssels ergibt sich vorteilhafter Weise eine erhöhte Sicherheit des Verfahrens gegenüber einem Angreifer, welcher ein Token mittels Track & Trace zu verfolgen versucht, da der Angreifer nun den symmetrischen Schlüssel des Lesegeräts kennen muss, um den ersten Wert zu erhalten, welchen er benötigt um den Schlüssel des Tokens zu erhalten, mit dem der Token verfolgbar wäre.

Auf das Senden des ersten Werts hin erfolgt Schritt B. In Schritt B empfängt der Token den ersten Wert und die ID des Lesegeräts mittels der Drahtloskommunikation über die Drahtloskommunikationsschnittstelle des Tokens. Der Token identifiziert das Lesegerät mittels seines Prozessors indem die empfangene ID mit einer in dem nicht-volatilen, internen Speicher des Tokens gespeicherten ID abgeglichen wird.

Ist der erste Wert erfindungsgemäß von dem Lesegerät an den Token verschlüsselt gesendet worden, so entschlüsselt der Token den ersten Wert mit dem symmetrischen Schlüssel des Lesegeräts, wobei dieser zusammen mit der ID in dem nicht-volatilen, internen Speicher des Tokens gespeichert ist.

Anschließend wird der erste Wert mit dem auf dem Token gespeicherten und dem Token zugeordneten symmetrischen Schlüssel verschlüsselt. Nun wird der verschlüsselte erste Wert als Rückgabewert mittels der Drahtloskommunikation über die Drahtloskommunikationsschnittstellen des Tokens und des Lesegeräts an das Lesegerät gesendet.

Diese Ausführungsformen der Erfindung sind vorteilhaft, da sich durch das Senden des verschlüsselten ersten Werts als Rückgabewert eine erhöhte Sicherheit des Verfahrens gegenüber einem Angreifer ergibt, der versucht, mittels "Track & Trace" die Authentifizierungspunkte des Tokens herauszufinden. Der Angreifer benötigt, gegebenenfalls zusätzlich zum symmetrischen Schlüssel des Lesegeräts, den symmetrischen Schlüssel des Tokens, um den Token zu identifizieren. Da der Token keine ihn identifizierenden Werte sendet, sondern den ersten Wert mit dem symmetrischen Schlüssel verschlüsselt, der den Token identifiziert. Die Identität des Tokens ist im Allgemeinen unbekannt, da der symmetrische Schlüssel schwer zu ermitteln ist. Das Identifizieren des Tokens ist nur dann möglich, wenn der symmetrische Schlüssel des Tokens ermittelt wurde.

Erfindungsgemäß umfasst der erste Wert in Schritt B eine Zufallszahl und zwischen Lesegerät und Token geteiltes, gemeinsames Geheimnis. Das geteilte, gemeinsame Geheimnis umfasst in einer weiteren Ausführungsform der Erfindung einen Initialvektor. Der Initialvektor wird in einer weiteren Ausführungsform der Erfindung der Zufallszahl vor der Verschlüsselung vorangestellt, insbesondere mit dieser konkateniert. In einer weiteren Ausführungsform der Erfindung wird das geteilte, gemeinsame Geheimnis bei jedem Authentifizierungsprozess in einem Lesegerät und Token gemeinsamen Verfahren synchron verändert, zum Beispiel gemäß einem vordefinierten Muster, insbesondere inkrementiert, um das gemeinsame Geheimnis nach jeder Verwendung zu verändern und damit die Sicherheit des Verfahrens weiter zu erhöhen.

Durch die Verwendung des geteilten, gemeinsamen Geheimnisses ergibt sich vorteilhafterweise eine Erhöhung der Sicherheit des Verfahrens gegenüber dem Angreifer, welcher einen Token mittels Track & Trace zu verfolgen versucht. Der Angreifer müsste das geteilte, gemeinsame Geheimnis und gegebenenfalls das verwendete gemeinsame Verfahren zur synchronen Änderung des geteilten, gemeinsamen Geheimnisses kennen, um die Identität oder gar den Schlüssel des Tokens zu ermitteln, mit dem der Token nicht nur verfolgbar sondern ein unberechtigter Zutritt zu dem geschützten Objekt möglich wäre.

Auf das Empfangen des Rückgabewerts durch das Lesegerät erfolgt Schritt C. Das Lesegerät versucht den Rückgabewert mit den in dem internen Speicher des Lesegeräts gespeicherten symmetrischen Schlüsseln zu entschlüsseln, bis eine Übereinstimmung des Rückgabewerts mit dem ersten Wert vorliegt oder alle symmetrischen Schlüssel durchprobiert wurden. Liegt eine Übereinstimmung des Rückgabewerts mit dem gesendeten ersten Wert vor, so ist der Token durch den Schlüssel identifiziert, da das Lesegerät den Token anhand des symmetrischen Schlüssels erkennen kann, welcher den Rückgabewert erfolgreich entschlüsselt hat. Dieser Prozess kann unterschiedliche lange dauern, wobei die Dauer sowohl von der Anzahl als auch von der Speicherposition des symmetrischen Schlüssels des Tokens in dem internen Speicher des Lesegeräts abhängt. Müssen nur wenige Schlüssel ausprobiert werden bis der richtige Schlüssel gefunden ist, beispielsweise weil das Lesegerät nur wenige Schlüssel gespeichert hat und/oder den richtigen Schlüssel zuerst verwendet hat, so ist die Prozessdauer kurz. Müssen hingegen viele Schlüssel durchprobiert werden bis der richtige Schlüssel gefunden ist, beispielsweise weil das Lesegerät viele Schlüssel gespeichert hat und/oder den richtigen Schlüssel zuletzt verwendet hat, so ist die Prozessdauer lang.

Nach Ausführungsformen der Erfindung kann ein solcher Suchprozess durch eine unterstützende Sortierung der symmetrische Schlüssel in dem internen Speicher des Lesegeräts verkürzt werden. Beispielhafter Weise, jedoch ohne darauf beschränkt zu sein, könnten die Schlüssel nach "Zeitpunkt der letzten erfolgreichen Authentifizierung" oder entsprechend geltender Schichtpläne der die Token verwendender Mitarbeiter sortiert sein. In dieser Ausführungsform der Erfindung ist neben dem symmetrischen Schlüssel des Tokens in dem internen Speicher des Lesegeräts eine Information gespeichert, wann der Token Zutritt gewährt bekommen soll. Die Sortierung der Liste der Schlüssel erfolgt dabei gemäß dem zeitlich nächsten Schichtbeginn.

In einer weiteren Ausführungsform der Erfindung erfolgt eine Sortierung nach der Häufigkeit mit der Eingänge benutzt werden, insbesondere bei einem zu schützenden Objekt mit mehreren Eingängen, welche die gleichen Sicherheitsrechte voraussetzen. Die zuvor genannten verschiedenen Möglichkeiten der Sortierung können auch beliebig kombiniert werden, wobei die einzelnen Sortierungsparameter unterschiedliche Prioritäten haben können.

Wurde die Zufallszahl in Schritt B gemäß einer genannten Ausführungsform der Erfindung mit dem geteilten, gemeinsamen Geheimnis kombiniert, so vergleicht das Lesegerät nicht den entschlüsselten ersten Wert mit dem gesendeten ersten Wert, sondern den entschlüsselten ersten Wert ohne das geteilte, gemeinsame Geheimnis mit dem gesendeten ersten Wert.

Auf die Übereinstimmung des entschlüsselten Rückgabewerts mit dem ersten Wert erfolgt Schritt D. Bei erfolgreicher Authentifikation des Tokens wird der Zutritt für den Token gewährt. Das Lesegerät steuert dazu an das Verriegelungsmittel mittels des Steuerungsmittels an, welches den Zutritt ermöglicht.

In einer weiteren Ausführungsform der Erfindung erfolgt die Gewährung des Zutritts nach dem Prüfen der Zutrittsrechte des Tokens. Die Zutrittsrechte des Tokens können dabei in dem internen Speicher des Lesegeräts, in einer Datenbank mit der das Lesegerät kommunikativ verbunden ist oder in dem nicht-volatilen, internen Speicher des Tokens gespeichert sein. Außerdem können die Zutrittsrechte Berechtigungen für unterschiedliche Sicherheitsstufen und/oder verschiedene Bereiche des zu schützenden Objekts umfassen.

Durch das Verwenden von dem Token zugewiesenen Zugriffsrechten ergibt sich in vorteilhafter Weise, dass Zugriffsrechte für verschiedene Personengruppen des zu schützenden Objekts vergeben werden können. Zum Beispiel, jedoch ohne darauf beschränkt zu sein, seien hier Ärzte und Reinigungspersonal in einem Krankenhaus oder Mitarbeiter und Besucher in einem Forschungsinstitut genannt. Eine erste Personengruppe a erhält beispielsweise Rechte für den Zutritt zu einem ersten Bereich A. Eine zweite Personengruppe b erhält Rechte für den Zutritt zu einem zweiten Bereich B. Die Bereiche A und B können entweder räumlich voneinander getrennt sein oder einander teilweise oder vollständig überlappen. Wenn Bereich A beispielhaft Bereich B komplett einschließt und A größer ist als B, dann hat die zweite Personengruppe b vollen Zutritt zu Bereich A, da Bereich B innerhalb von Bereich A liegt. Die erste Personengruppe a hat allerdings keinen Zugriff auf Bereich B, sondern nur Zutritt zu dem gemeinsamen Bereich A.

In einer weiteren Ausführungsform der Erfindung weist das Lesegerät und/oder der Token ein Eingabemittel zur Eingabe einer persönlichen Identifikationsnummer (PIN) eines Tokeninhabers auf. Das Eingabemittel kann eine Tastatur, ein Touchpad, ein Zahlenfeld, ein Touchscreen oder etwas Vergleichbares, wie zum Beispiel ein Mittel zur Spracheingabe sein. Der Zutritt zu dem zu schützenden Objekt wird gewährt nach einem erfolgreichen Prüfen der am Eingabegerät des Lesegeräts und/oder des Tokens eingegebenen PIN. Die PIN des Tokeninhabers ist zum Abgleich in dem internen Speicher des Lesegeräts, auf einer Datenbank, mit der das Lesegerät kommunikativ verbunden ist, und/oder in dem nicht-volatilen, internen Speicher des Token gespeichert.

In einer weiteren Ausführungsform weist das Lesegerät und/oder der Token ein Sensormittel zur Erfassung biometrischer Merkmale des Tokeninhabers auf. Die Sensormittel umfassen beispielsweise ein optisches System, insbesondere eine Kamera, ein Fingerabdrucksensor, ein Retina- oder Irisscanner, ein Sensor zur Erfassung der Gesichtsgeometrie, ein Sensor zur Erfassung der Handgeometrie, ein Sensor zur Erfassung der Handlinienstruktur, ein Sensor zur Erfassung der Handvenenstruktur, ein Sensor zur Erfassung der Ohrmuschelform, ein Mikrophon zur Erfassung der Stimme, ein Sensor zur Erfassung der DNS, oder eine Kombination der aufgezählten Sensoren. Der Zutritt zu dem zu schützenden Objekt wird gewährt nach dem erfolgreichen Prüfen eines oder mehrerer biometrischen Merkmale des Tokeninhabers. Die biometrischen Merkmale des Tokeninhabers sind zum Abgleich in dem internen Speicher des Lesegeräts, auf einer Datenbank, mit der das Lesegerät kommunikativ verbunden ist, und/oder in dem nicht-volatilen, internen Speicher des Token gespeichert.

Durch das Verwenden der PIN und/oder der biometrischen Merkmale des Tokeninhabers als Prüfmerkmal zur Zutrittskontrolle ergibt sich vorteilhafterweise eine Erhöhung der Sicherheit des Verfahrens gegenüber Fälschungen des Tokens. Angreifer müssten, nur einen möglicherweise gefälschten oder gestohlenen Token besitzen, sondern auch die PIN des Tokeninhabers kennen und/oder die biometrischen Merkmale des Tokeninhabers nachahmen, um Zutritt zu dem zu schützenden Objekt zu erhalten. Die Authentifizierung wird somit zu einer Multi-/ oder Zwei-Faktor-Authentifizierung.

In einer weiteren Ausführungsform der Erfindung weist das Lesegerät und/oder der Token eine Schnittstelle zur Kommunikation mit externen Geräten auf. Eine solche Schnittstelle umfasst eine Drahtloskommunikationsschnittstelle oder eine kabelgebundene Schnittstelle, insbesondere, ohne darauf beschränkt zu sein, einen USB-Anschluss. Mittels einer solchen Schnittstelle lassen sich zusätzliche Bedingungen des zu schützenden Objekts, die ein Kriterium für den Zutritt einer Person spielen können, überprüfen.

In einer weiteren Ausführungsform der Erfindung können spezielle Bedingungen des zu schützenden Objekts, wie beispielsweise in einem Nuklearkraftwerk, auftreten. Ein Lesegerät im Reaktorbereich kann beispielsweise eine Schnittstelle zur Kommunikation mit einem Dosimeter aufweisen und den Zutritt unabhängig von der Person nur dann gewähren, wenn ein von einem Dosimeter erfasster Strahlungswert unterhalb eines festgelegten Schwellenwerts liegt.

Durch die Verwendung von Daten externer Geräte als Zutrittskriterium werden auch personenunabhängige und/oder spezielle dem zu schützenden Objekt entsprechende Bedingungen als Zutrittskontrollkriterium verwendet werden.

In weiteren Ausführungsformen der Erfindung werden Umweltbedingungen und/oder die Physiologie des Tokeninhabers, beispielsweise der Puls und der Blutdruck mittels einer Smart-Watch, erfasst.

Durch Verwenden einer Datenbank, mit der die Lesegeräte kommunikativ verbunden sind, ergibt sich vorteilhafterweise eine vereinfachte Verwaltung der Zugriffsrechte und/oder der PIN und/oder der biometrischen Merkmale eines Tokeninhabers. Des Weiteren muss durch die Verwendung der Datenbank ein Token nicht mit jedem Lesegerät einzeln initiiert werden, sondern nur an einem einzigen Lesegerät. Die ausgetauschten Geheimnisse stehen sodann jedem Lesegerät innerhalb des Netzwerks von Lesegeräten und der Datenbank über die Datenbank zur Verfügung. Weiterhin ist eine schnelle Änderung der Zutrittsrechte für einen einzelnen Token oder einer Gruppe von Token möglich. Beispielsweise kann eine Gruppe von Mitarbeitern, die eine bestimmte Aufgabe erfüllen müssen oder in einer bestimmten Schicht arbeiten mit besonderen Rechten ausgestattet werden. Beispielsweise Arbeiter in einer Fabrik mit Nachtschicht, wobei nicht alle Arbeiter eine Erlaubnis zur Nachtschicht besitzen. Insbesondere, wenn die Nachtschicht nur nach Produktionsbedarf der stattfindet, können die Zutrittsrechte für die Arbeiter mit Nachtschichterlaubnis vergeben werden. Außerdem kann eine zentrale Änderungs- oder Verwaltungsstelle betrieben werden, welche die Verwaltung der Zutrittskontrolle vereinfacht.

In einem weiteren Aspekt betrifft die Erfindung ein Verfahren zum Paaren eines Tokens mit einem Lesegerät. Dabei muss sich der Token und ggf. der Tokeninhaber gegenüber dem Lesegerät über einen Sicherheitsanker identifizieren und authentifizieren. Dieses Identifizieren und Authentifizieren des Tokeninhabers erfolgt über einen Vertrauensanker, welcher beispielsweise ein Zertifikat oder eine Vorlage eines Sicherheitsdokuments, insbesondere eines Personalausweises des Tokeninhabers bei einer für die Zutrittskontrolle verantwortlichen Instanz umfassen kann.

Durch die Verwendung des Vertrauensankers ist der Token in der Lage Lese- und Schreibrechte an Lesegeräte zu vergeben, sofern sich der Tokeninhaber gegenüber der Zutrittskontrolle identifiziert und authentifiziert hat.

Während des Paarungsprozesses werden der symmetrische Schlüssel des Tokens, die ID des Lesegeräts, gegebenenfalls der symmetrische Schlüssel des Lesegeräts und gegebenenfalls das geteilte, gemeinsame Geheimnis zwischen dem Token und dem Lesegerät ausgetauscht und jeweils in dem nicht-volatilen, internen Speicher des Token und dem internen Speicher des Lesegerät bzw. der Datenbank gespeichert.

Für das Paaren eines Tokens an einem Lesegerät ergibt sich vorteilhafterweise, dass die Festlegung der Rahmenbedingungen für die Zutrittskontrolle aus einem Zeitraum der Stoßzeiten ausgelagert werden kann. Dies ermöglicht einen erhöhten Sicherheitsfaktor während des Paarungsprozesses, welcher mit einem zeitintensiveren Rechenaufwand einhergeht. Gleichzeitig wird durch das Auslagern des Festlegens der Rahmenbedingungen für die Zutrittskontrolle die Behinderung der Zutrittskontrolle von vielen Personen innerhalb der Stoßzeit minimiert, da innerhalb dieser Zeit keine Paarungen stattfinden. In einer weiteren Ausführungsform der Erfindung kann der Zeitraum des Paarens frei gewählt werden, sodass jeder Tokeninhaber selbst entscheiden kann, wann er seinen Token mit einem Lesegerät paaren möchte.

Das Austauschen der symmetrischen Schlüssel, der ID und des geteilten, gemeinsamen Geheimnisses erfolgt unter Verwendung eines asymmetrischen kryptographischen Verfahrens. Das kryptographische Verfahren umfasst beispielsweise, ohne darauf beschränkt zu sein, Terminal Authentication und/oder Chip Authentication.

Bei dem Verfahren der Terminal Authentifikation ist der Token so angelegt, dass er bestimmte Daten nur dann zum Lesen und/oder Schreiben freigibt, wenn das Lesegerät eine explizite Lese- bzw. Schreibberechtigung für genau diese Daten nachweisen kann. Damit der Token diese Berechtigung prüfen kann, hat er ein entsprechendes Wurzel-Zertifikat gespeichert. Dieses Zertifikat bildet die Wurzel der PKI (Public Key Infrastructure), einer Hierarchie für die Berechtigungs-Zertifikate für das Lesen und Schreiben von sensiblen Daten auf den Token.

Bei der "Terminal Authentication" schickt das Lesegerät seine Lese- und Schreibberechtigungen in Form eines Zertifikats bzw. einer Kette von Zertifikaten an den Token. Der Token prüft die Echtheit und Unverfälschtheit der übermittelten Zertifikate.

Für ein positives Ergebnis der Prüfung müssen alle übermittelten Zertifikate jeweils mit dem geheimen Schlüssel ihres Vorgängers signiert worden sein, beginnend mit einem aus dem Wurzel-Zertifikat abgeleiteten Zertifikat. Dieses kann der Token prüfen, da der öffentliche Schlüssel der Wurzel bei der Personalisierung in dem nicht-volatilen, internen Speicher des Tokens gespeichert wird.

Wenn die Echtheit und Unverfälschtheit der vom Lesegerät gesendeten Zertifikate erfolgreich geprüft wurde, muss der Token noch sicherstellen, dass das letzte übermittelte Zertifikat auch wirklich für dieses Lesegerät ausgestellt wurde. Daher übermittelt der Token eine Zufallszahl an das Lesegerät, welches diese mit dem geheimen Schlüssel signiert, der zu dem zuletzt übermittelten Zertifikat gehört. Dann sendet das Lesegerät die signierte Zufallszahl zurück an den Token. Mit dem öffentlichen Schlüssel des Lesegeräts, welcher im zuletzt übermittelten Zertifikat enthalten ist, kann der Token die Signatur der Zufallszahl prüfen und damit feststellen, ob das Lesegerät den zum Zertifikat passenden geheimen Schlüssel besitzt. Damit ist für den Token die Authentizität des Lesegerätes bewiesen und die im Zertifikat geforderten Lese- und Schreibrechte werden vom Token gewährt.

Chip Authentication dient dazu, eine gesicherte Verbindung zwischen einem Token und einem Lesegerät aufzubauen. In jedem Token, welches Chip Authentication unterstützt, ist ein Schlüsselpaar speziell für diesen Token gespeichert. Dieses besteht aus einem privaten und einem öffentlichen Schlüssel. Der private Schlüssel wird in einem bestimmten Bereich Teil des nicht-volatilen, internen Speicher des Tokens gespeichert, aus dem er nicht ausgelesen werden kann. Der öffentliche Schlüssel des Tokens ist dem Lesegerät bekannt oder wird aus dem Token ausgelesen, wobei der öffentliche Schlüssel des Tokens von einer vertrauenswürdigen Instanz signiert wurde. Durch die Signatur kann das Lesegerät die Echtheit des öffentlichen Schlüssels des Tokens mittel "Passiver Authentisierung" verifizieren. Wenn für einen "geklonten" Token ein neues Schlüsselpaar erzeugt worden wäre, würde dies bei der Passiven Authentisierung auffallen, da der öffentliche Schlüssel durch eine digitale Signatur gegen unbemerkte Veränderungen geschützt ist.

Das Lesegerät erzeugt bei jedem Lesevorgang ebenfalls ein eigenes Schlüsselpaar, bestehend aus einem öffentlichen und einem geheimen Schlüssel, und schickt seinen öffentlichen Schlüssel an den Token. Nun können sowohl der Token als auch das Lesegerät jeweils aus ihrem eigenen privaten Schlüssel, dem öffentlichen Schlüssel des anderen und der Zufallszahl denselben geheimen Schlüssel berechnen. Dieser geheime Schlüssel sichert in der weiteren Kommunikation zwischen Token und Lesegerät die starke Verschlüsselung der Daten. Mit Hilfe des gemeinsamen geheimen Schlüssels kann nun das Lesegerät prüfen, ob der Token den richtigen privaten Schlüssel besitzt.

Ein "geklonter" Token kann den originalen privaten Schlüssel nicht besitzen. Würde er einfach einen anderen privaten Schlüssel benutzen, wäre das abgeleitete "gemeinsame" Geheimnis nicht identisch und für die gesicherte Verbindung würden vom Lesegerät und vom Token unterschiedliche Schlüssel verwendet, womit die Kommunikation fehlschlägt.

Gemäß einer Ausführungsform der Erfindung werden während des Paarungsprozesses die Zutrittsrechte des Tokens festgelegt und/oder in einer weiteren Ausführungsform der Erfindung bei dem Paarungsprozess zwischen Token und Lesegerät ausgetauscht.

In einer weiteren Ausführungsform der Erfindung muss der Paarungsprozess nach einer Zeit T' und/oder nach einer bestimmten Anzahl n' von Authentifizierungsversuchen des Tokens erneut durchgeführt werden. Die Neudurchführung des Paarungsprozesses wird durch das Lesegerät oder den Token initiiert. In einer weiteren Ausführungsform der Erfindung wird der Paarungsprozess zwischen dem Token und dem Lesegerät wiederholt, auch wenn die Paarung des Tokens und des Lesegeräts noch gültig ist.

Durch die wiederholte Durchführung der Paarung des Token mit dem Lesegerät ergibt sich vorteilhafterweise ein regelmäßiges Festlegen neuer Parameter und eine regelmäßige Kontrolle der Paarung des Tokens und des Tokeninhabers. Dies erschwert wiederum das Ermitteln der Schlüssel der Token für Angreifer, da sich der symmetrische Schlüssel regelmäßig ändert.

In einer weiteren Ausführungsform der Erfindung werden eine oder mehrere Zufallszahlen im Lesegerät erzeugt bevor ein Token in die Drahtloskommunikationsreichweite eines Lesegeräts gebracht wird. Dann wird eine Verschlüsselung des ersten Werts, welcher die Zufallszahl und gegebenenfalls das geteilte, gemeinsame Geheimnis umfasst, mit dem symmetrischen Schlüssel des Tokens durchgeführt und in dem internen Speicher des Lesegeräts oder in einer Datenbank gespeichert. So entsteht eine Liste von verschlüsselten ersten Werten, welche die verschlüsselte erste Werte für jeden mit dem Lesegerät gepaarten Token enthält. In Schritt C kann das Lesegerät den entsprechenden Token dann durch den Vergleich des Rückgabewerts von dem Token mit dem verschlüsselten ersten Wert in dem internen Speicher des Lesegeräts oder der Datenbank identifizieren, ohne dabei den Rückgabewert entschlüsseln zu müssen.

Durch das Vergleichen des Rückgabewerts mit dem verschlüsselten ersten Wert aus dem internen Speicher des Lesegeräts oder der Datenbank ergibt sich vorteilhafterweise ein minimierter Rechenaufwand des Prozessors des Lesegeräts während des Prüfens bzw. des Auswertens der Prüfung. Dem zufolge kann, insbesondere auch zu Stoßzeiten, eine große Anzahl zu kontrollierende Personen innerhalb einer kurzen Zeit authentifiziert werden.

In einer weiteren Ausführungsform der Erfindung wird ein und dieselbe Zufallszahl solange verwendet bis alle Token diese Zufallszahl für einen Authentifizierungsversuch verwendet haben und/oder eine Zeit T abgelaufen ist und/oder eine Anzahl n an Authentifizierungsversuchen durch ein Lesegerät erfolgt ist und/oder ein Token ein und dieselbe Zufallszahl ein zweites Mal für eine Identifikation verwendet hat. In Ausführungsformen der Erfindung umfassen beispielsweise, ohne darauf beschränkt zu sein, T eine Größenordnung von einem Tag oder eine Woche und n eine Größenordnung von 100 oder 1000. Die exakte Dauer T und die exakte Anzahl n sind dabei anpassbar in Abhängigkeit von dem zu schützenden Objekt und der erwarteten Anzahl an Personen, welchen Zutritt gewährt werden soll. Nach weiteren Ausführungen der Erfindung können weitere, hier nicht aufgezählte, Bedingungen, die das Verwenden einer neuen Zufallszahl auslösen, angewandt werden.

Durch das Verwenden einer Zufallszahl für mehrere Token bis zum Erfüllen einer der vordefinierten Bedingungen, ergibt sich vorteilhafterweise, dass die Verschlüsselung für alle Token für nur einen einzigen ersten Wert vorausberechnet werden muss. Dies verringert den Ressourcenverbrauch, insbesondere durch Senkung der Rechenleistung und Rechenzeit des Prozessors des Lesegeräts. Erst wenn eine der vordefinierten Bedingungen eintritt, wird eine neue Zufallszahl verwendet. Würde sich die Zufallszahl jedes Mal ändern, wenn sich ein Token erfolgreich Identifiziert hat, so würde der erste Wert nach jeder erfolgreichen Identifikation für jeden mit dem Lesegerät gepaarten Token berechnet werden. Dies würde einen enormen Rechenaufwand, insbesondere zu Stoßzeiten, zur Folge haben.

In einer weiteren Ausführungsform der Erfindung wird die Identifikation des Tokens wiederholt, wenn der Token ein zweites Mal mit ein und derselben Zufallszahl identifiziert wurde.

Durch das Wiederholen der Identifikation des Tokens, wenn sich der Token ein zweites Mal mit ein und derselben Zufallszahl identifiziert hat, ergibt sich in vorteilhafter Weise, dass ein Angreifer, der den Rückgabewert eines Tokens für eine bestimmte Zufallszahl kennt, nicht warten kann, bis die Zufallszahl erneut verwendet wird und/oder nicht den Rückgabewert kopieren kann, um Zutritt zu erlangen. Da die Identifikation wiederholt wird, müsste ein Angreifer auch den nächsten Rückgabewert kennen.

In einer weiteren Ausführungsform der Erfindung werden mehrere Listen vorausberechnet, welche verschlüsselte erste Werte auf Basis von unterschiedlichen Zufallszahlen umfassen.

Durch das Vorausberechnen mehrerer Listen von verschlüsselten Werten ergibt sich vorteilhafterweise, dass das Lesegerät in der Lage ist, bei Bedarf eine neue Zufallszahl zu verwenden, ohne dass ein verschlüsselter erster Wert für jeden mit dem Lesegerät gepaarten Token berechnet werden muss. Ein solcher Bedarf kann vorliegen, wenn alle Zufallszahlen einer Liste verwendet wurden oder aus anderen Gründen die Zufallszahl gewechselt wird und dennoch Authentifizierungsversuche ausstehen, da das Lesegerät ohne erneute Vorausberechnung zur Verwendung der nächsten Zufallszahl und damit zur nächsten Liste übergeht. Somit kann ein Fall vermieden werden, in dem das Lesegerät keine vorausberechneten Zufallszahlen mehr gespeichert hat.

In einer weiteren Ausführungsform der Erfindung werden die Listen vorausberechnet, wenn aktuell keine Authentifizierungsversuche stattfinden und/oder sich das ganze System in einem festgelegten Zeitrahmen außerhalb der Stoßzeiten befindet. Dies kann zum Beispiel, ohne darauf beschränkt zu sein, nachts oder während laufender Schichten sein. Eine weitere Bedingung für das Vorausberechnen von Listen umfasst ein Zuneigegehen des Vorrats an Listen. Erreicht die Anzahl der vorausberechneten Listen einen unteren Schwellenwert beginnt das Lesegerät neue Listen vorauszuberechnen, falls keine Authentifizierungsversuche stattfinden.

Durch das Vorausberechnen der Listen unter den oben genannten Bedingungen ergibt sich vorteilhafterweise, dass das Ent- und Verschlüsseln des ersten Werts nicht während der Authentifizierung stattfindet, sondern im Vorfeld durch das Lesegerät erfolgt. Die Listen werden nicht in Stoßzeiten berechnet und reduzieren somit die Wahrscheinlichkeit eines hohen Rechenaufwandes für den Prozessor des Lesegeräts während der Stoßzeit. Somit wird die Wahrscheinlichkeit zur Entstehung langer Wartezeiten für die zu kontrollierenden Personen reduziert.

Im Weiteren werden die Ausführungsformen der Erfindung mit Bezugnahme auf die Zeichnungen näher erläutert. Es zeigen:
- Figur 1: ein beispielhaftes Verfahren zur Authentifizierung eines Tokens gegenüber einem Lesegerät als schematisches Ablaufdiagramm,
- Figur 2: ein schematisches Ablaufdiagramm eines Verfahrens, in dem das Lesegerät den ersten Wert W verschlüsselt an den Token sendet,
- Figur 3a: einen schematischen Aufbau und die Komponenten eines Lesegeräts und eines Tokens,
- Figur 3b: schematische Verbindungen eines Lesegeräts mit einem Token und einer Datenbank oder einer zentralen Zutrittsverwaltung, welche mit weiteren Lesegeräten in Verbindung steht,
- Figur 4a: einen schematisches Ablaufdiagramm eines Verfahrens zur Bestimmung von Listen der verschlüsselten Zufallszahlen vor einem Authentifizierungsprozess,
- Figur 4b: ein schematisches Ablaufdiagramm eines Verfahrens zur Bestimmung, ob eine nächste Zufallszahl bestimmt werden muss oder nicht,
- Figuren 5a und 5b: schematische Ablaufdiagramme von Varianten des Schrittes C, in dem ein Lesegerät ein Token anhand des Rückgabewerts identifiziert,
- Figur 6: ein schematisches Ablaufdiagramm von Schritt D, in dem das Verriegelungsmittel unter verschiedenen Bedingungen angesteuert wird.

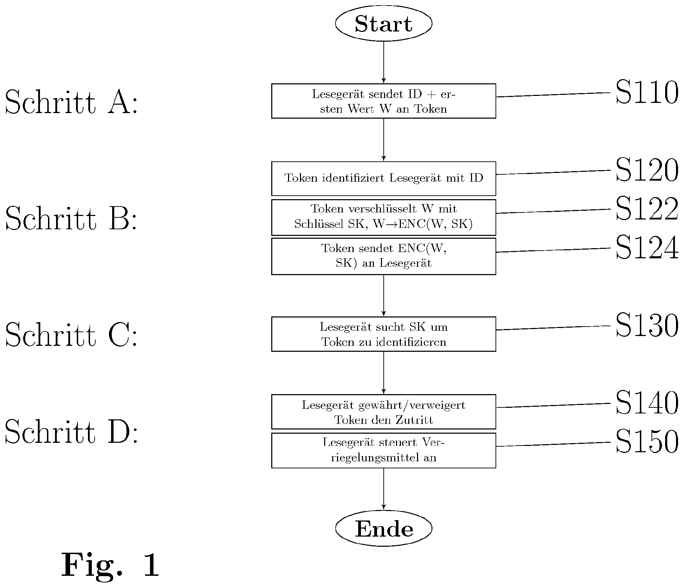

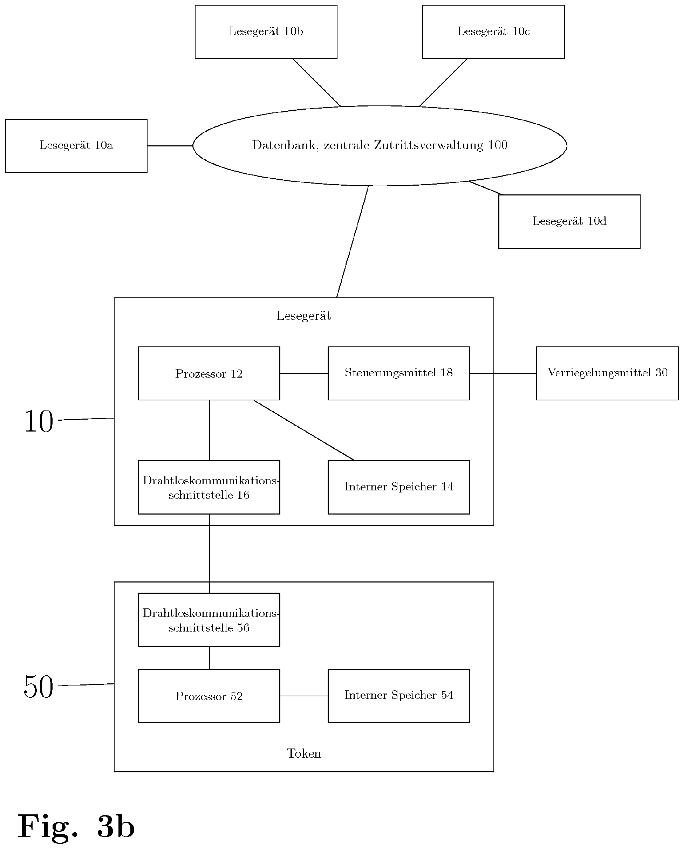

Figur 1 zeigt ein Ablaufdiagramm, welches einen Authentifizierungsprozess eines Tokens 50 gegenüber einem Lesegerät 10 darstellt. Nach einem Paaren des Tokens 50 mit dem Lesegerät 10 sendet das Lesegerät 10 in einem Schritt A seine ID und einen ersten Wert W über eine Drahtloskommunikationsschnittstelle 16 des Lesegeräts 10, woraufhin eine Drahtloskommunikationsschnittstelle 56 des Tokens 50 die ID und den ersten Wert W empfängt (S110). In einem Schritt B identifiziert der Token 50 das Lesegerät 10 anhand der empfangenen ID, indem die empfangene ID mit den in einem nicht-volatilen, internen Speicher 54 des Tokens 50 gespeicherten IDs der Lesegeräte 10, 10a, 10b, 10c, 10d, usw. (vgl. Fig. 3b) verglichen wird (S120), bis eine Übereinstimmung der empfangenen ID mit einer gespeicherten IDs festgestellt wird.

Anschließend verschlüsselt der Token 50 den ersten Wert W mit einem symmetrischen Schlüssel SK, welcher dem Token 50 zugeordnet ist. Der Rückgabewert ENC(W, SK) wird gebildet, wobei der erste Wert W durch den Prozessor 52 des Tokens 50 zum Rückgabewert ENC(W, SK) verschlüsselt wird (S122). Schließlich sendet der Token 50 den Rückgabewert ENC(W, SK) über die Drahtloskommunikationsschnittstelle 56 des Tokens 50 an die Drahtloskommunikationsschnittstelle 16 des Lesegeräts 10 (S124). In einem Schritt C (S130) sucht das Lesegerät 10 solange in seinem internen Speicher 14 nach einem Schlüssel SK, bis es den Token 50 identifiziert hat. Dabei versucht es so lange den Rückgabewert ENC(W, SK) zu entschlüsseln, bis ein passender Schlüssel SK gefunden wurde und der entschlüsselte Rückgabewert DEC(ENC(W, SK), SK) dem ersten Wert W entspricht. Die Entschlüsselung des Rückgabewerts ENC(W, SK) wird dabei durch den Prozessor 12 des Lesegeräts 10 ausgeführt. Wird der erste Wert W aus dem Rückgabewert ENC(W, SK) durch Entschlüsselung erhalten, so gewährt das Lesegerät 10 dem Token 50 den Zutritt (S140) und steuert in einem Schritt D das Verriegelungsmittel 30 mittels des Steuerungsmittels 18 entsprechend an (S150).

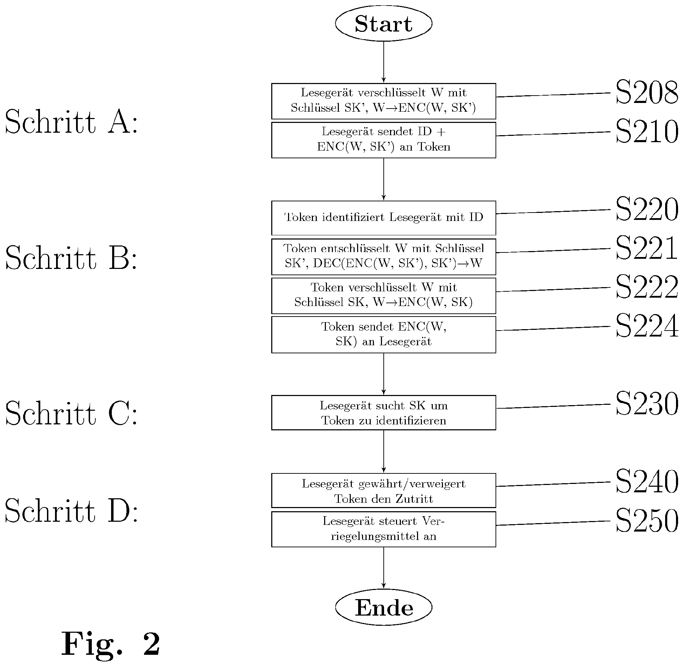

Figur 2 zeigt ein Ablaufdiagramm. Bevor das Lesegerät 10 seine ID und den ersten Wert W an den Token 50 sendet, verschlüsselt das Lesegerät 10 den ersten Wert W mit einem symmetrischen Schlüssel SK', welcher dem Lesegerät 10 zugeordnet ist (S208). Dabei entsteht der verschlüsselte erste Wert ENC(W, SK'). Dieser verschlüsselte erste Wert ENC(W, SK') wird an den Token 50 gesendet (S210). In einem Schritt B identifiziert der Token 50 das Lesegerät 10 anhand der mitgesendeten ID (S220) und entschlüsselt den verschlüsselten ersten Wert ENC(W, SK') mit dem Schlüssel SK', welcher in dem internen Speicher 54 des Tokens 50 gespeichert ist (S221). Der Token 50 erhält so den ersten Wert W. Nun verschlüsselt der Token 50 den ersten Wert W mit einem symmetrischen Schlüssel SK, welcher dem Token 50 zugeordnet ist, wodurch der Rückgabewert ENC(W, SK) entsteht (S222). Der Rückgabewert ENC(W, SK) wird an das Lesegerät 10 gesendet (S224). Die Schritte C und D sind analog zu den Schritten C und D der Figur 1 (vgl. S130, S240 und S150 mit S230, S240 und S250).

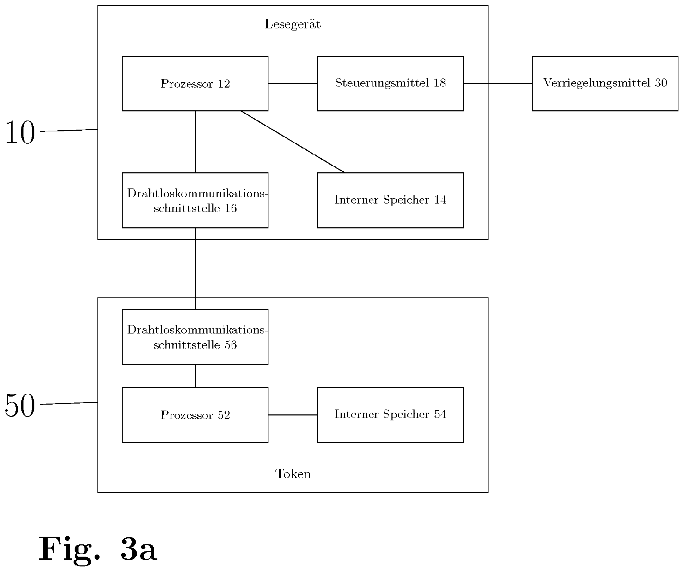

Figur 3a zeigt schematisch den Aufbau eines Lesegeräts 10 und eines Tokens 50. Das Lesegerät 10 umfasst einen Prozessor 12 zum Erzeugen und Verschlüsseln einer Zufallszahl RN und zum Entschlüsseln eines Rückgabewerts ENC(W, SK), ein Steuerungsmittel 18 zum Ansteuern eines Verriegelungsmittels 30, einen internen Speicher 14, in dem die symmetrischen Schlüssel SK der mit dem Lesegerät gepaarten Token 50 gespeichert sind und eine Drahtloskommunikationsschnittstelle 16 zur Kommunikation mit dem Token 50.

Der Token 50 umfasst einen Prozessor 52 zum Entschlüsseln eines verschlüsselten ersten Werts ENC(W, SK') und zum Verschlüsseln des Rückgabewerts ENC(W, SK), einen nicht-volatilen, internen Speicher 54, auf dem die IDs der Lesegeräte 10, 10a, 10b, 10c, 10d (vgl. Fig. 3b) und ggf. die passenden Schlüssel SK' gespeichert sind, und eine Drahtloskommunikationsschnittstelle 56 zur Kommunikation mit dem Lesegerät 10. Dabei sind die Drahtloskommunikationsschnittstelle 16 des Lesegeräts 10 und die Drahtloskommunikationsschnittstelle 56 des Tokens 50 so konfiguriert, dass sie miteinander kommunizieren können. Ferner ist das Steuerungsmittel 18 des Lesegeräts 10 in der Lage, das Verriegelungsmittel 30 anzusteuern.

In einer weiteren Ausführungsform der Erfindung umfassen der Prozessor 12 des Lesegeräts 10 und der Prozessor 52 des Tokens 50 einen oder mehrere Prozessorkerne und/oder mehrere Co-Prozessoren.

Figur 3b zeigt ein Lesegerät 10, welches mit einer Datenbank 100 oder einer Zutrittsverwaltung verbunden ist. Dabei sind mit der Datenbank 100 oder der zentralen Zutrittsverwaltung weitere Lesegeräte 10a, 10b, 10c und 10d verbunden. Die Anzahl der Lesegeräte ist dabei nicht festgelegt und dient hier lediglich als Beispiel.

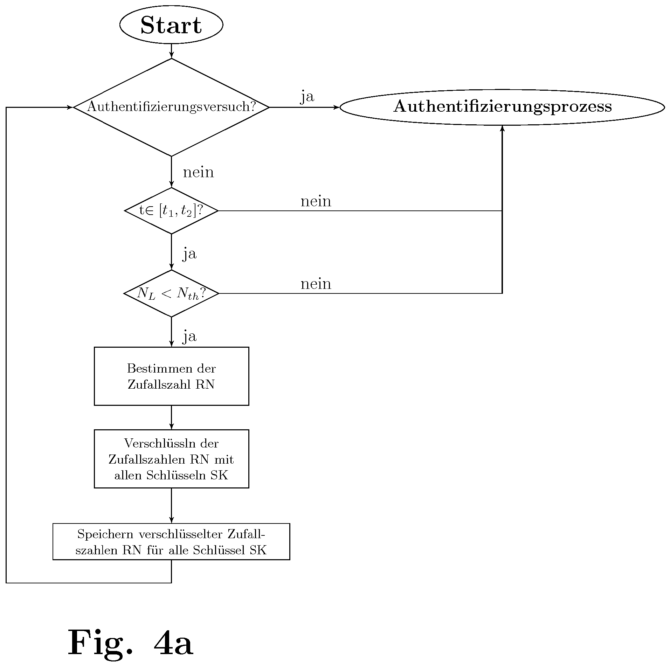

Figur 4a zeigt einen Teil eines Verfahrens zur Authentifizierung, bei dem erste Werte W, welche eine Zufallszahl RN umfassen vor einem Authentifizierungsprozess in Listen gespeichert werden. Zunächst prüft das Lesegerät 10, ob ein aktueller Authentifizierungsversuch vorliegt. Ist dies nicht der Fall, so ist es in einer weiteren Ausführungsform der Erfindung möglich, zu überprüfen, ob die aktuelle Uhrzeit t innerhalb eines festgelegten Zeitintervalls zwischen der Uhrzeit t1 und der Uhrzeit t2 liegt, wobei t2 zeitlich auf t1 folgt. Die Uhrzeit t kann entweder durch eine in dem Lesegerät 10 implementierte Uhr ermittelt oder von der Datenbank 100 bzw. der zentralen Zutrittsverwaltung oder einer weiteren nicht näher bestimmten Quelle empfangen werden. Wird das erfindungsgemäße Verfahren in einer Fabrik angewandt, so ist beispielsweise t1 ein Zeitpunkt nach Ende einer letzten Schicht eines Tages und t2 ein Zeitpunkt vor Beginn einer Schicht des folgenden (Werk-) Tages.

Befindet sich das Lesegerät 10 in einem solchen Zeitintervall, kann in einer weiteren Ausführungsform der Erfindung geprüft werden, ob die Anzahl der zur Verfügung stehenden Listen N_{L} der verschlüsselten ersten Werte ENC(W, SK) kleiner ist als die Anzahl eines Schwellenwerts von Listen Nₜₕ der verschlüsselten ersten Werte ENC(W, SK). Ist die Anzahl der vorliegenden Listen N_{L} kleiner als ein Schwellenwert Nₜₕ der verschlüsselten ersten Werte ENC(W, SK) so wird eine neue Zufallszahl RN bestimmt. Die Zufallszahl RN wird dann, gegebenenfalls mit dem zwischen dem Token 50 und dem Lesegerät 10 geteilten, gemeinsamen Geheimnis kombiniert, als erster Wert W mit allen Schlüsseln SK verschlüsselt, wobei die symmetrischen Schlüssel SK jeweils einem mit dem Lesegerät 10 gepaarten Token 50 zugeordnet sind. Die resultierenden verschlüsselten erste Werte ENC(W, SKᵢ) werden dann als Liste gespeichert. Sodann wird überprüft, ob ein aktueller Authentifizierungsversuch vorliegt. Liegt ein aktueller Authentifizierungsversuch vor oder befindet sich die aktuelle Uhrzeit t außerhalb des vorgegebenen Zeitintervalls zwischen t1 und t2 oder ist der Anzahl der Listen N_{L} der verschlüsselten ersten Werte ENC(W, SK) größer als der Schwellenwert der Listen Nₜₕ der verschlüsselten ersten Werte ENC(W, SK), so wartet das Lesegerät 10 den Start eines Authentifizierungsprozesses mit einem Token 50.

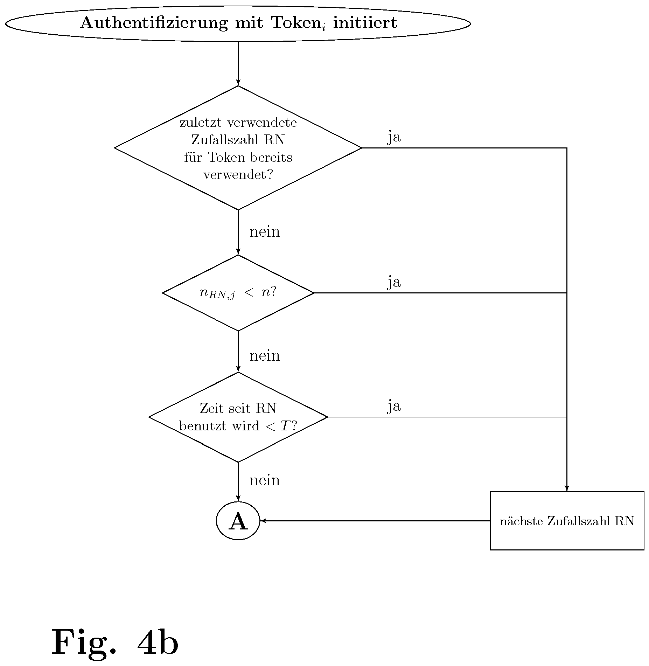

Figur 4b zeigt einen Teil des Verfahrens einer weiteren Ausführungsform der Erfindung. Dabei wird geprüft, welche der Listen bzw. welche Zufallszahl RN zur Identifizieren des Tokens 50 von einem Lesegerät 10 benutzt werden soll. Ist die Identifikation des Tokens 50 initiiert, so wird geprüft, ob die zuletzt verwendete Zufallszahl RN mit dem Token 50 bereits verwendet wurde. Ist dies nicht der Fall, so wird geprüft, ob eine Anzahl n_{RN,j} der Authentifizierungsversuche mit der Zufallszahl RN kleiner ist als eine Anzahl n der zulässigen Authentifizierungsversuche mit einer Zufallszahl RN. Ist auch dies nicht der Fall, so wird geprüft, ob die Zeit T' seit dem ersten Benutzen der Zufallszahl RN kleiner ist als eine festgelegte Zeit T. Ist auch dies nicht der Fall, so kann die Authentifizierung des Tokens 50 mit Schritt A beginnen. Wurde die zuletzt verwendete Zufallszahl RN mit dem Token 50 bereits verwendet oder ist Zeit T' seit der ersten Verwendung der Zufallszahl RN größer als eine zulässige Zeit T oder ist die Anzahl n_{RN,j} der Verwendungen der Zufallszahl RN größer als eine zulässige Anzahl n an Verwendungen der Zufallszahl RN so wird die nächste Zufallszahl RN bzw. die dazugehörige Liste zur Identifizierung des Tokens 50 verwendet.

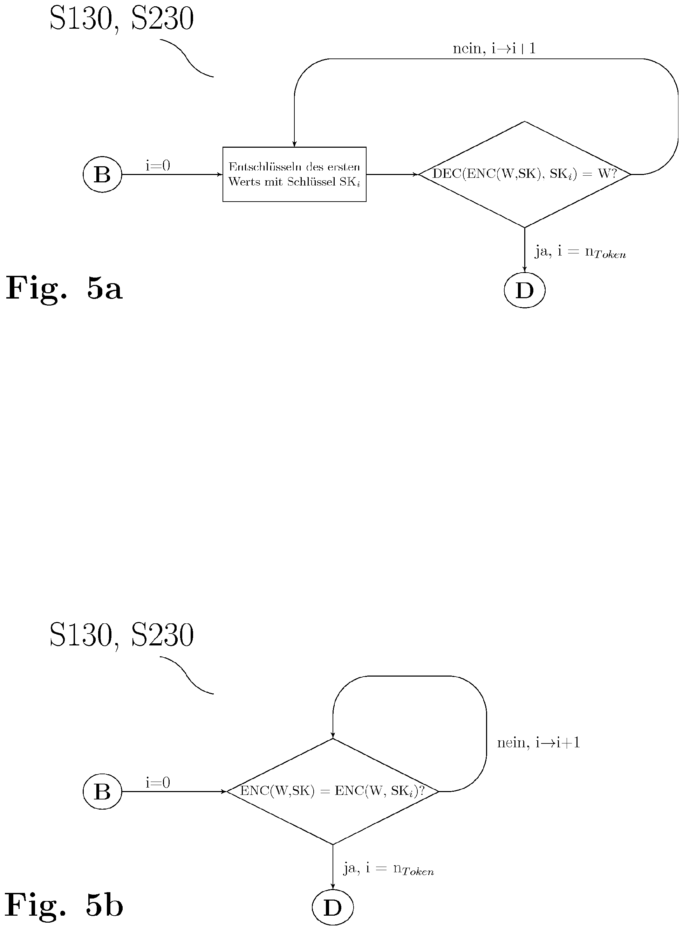

Figur 5a zeigt Schritt C (S130, S230), in dem das Lesegerät 10 nach dem richtigen symmetrischen Schlüssel SK sucht, um den Token 50 zu identifizieren. In Schritt B sendet der Token 10 den Rückgabewert ENC(W, SK) an das Lesegerät 10. Dieser Rückgabewert ENC(W, SK) wird von dem Lesegerät 10 mit einem ersten Schlüssel SKᵢ entschlüsselt, wobei ein Zähler i zunächst 0 ist, und der entschlüsselte Rückgabewert DEC(ENC(W, SK), SKᵢ) gebildet. Ist der entschlüsselte Rückgabewert DEC(ENC(W, SK), SKᵢ) gleich dem ersten Wert W, so kann dem Token 50 der Schlüssel SKᵢ bzw. die Identität i, zugewiesen werden. Damit ist der Token 50 identifiziert. Ist der entschlüsselte Rückgabewert DEC(ENC(W, SK), SKᵢ) ungleich dem ersten Wert W, so wird i um 1 erhöht und das Lesegerät 10 entschlüsselt den Rückgabewert mit dem Schlüssel SKᵢ₊₁. Dann wird wieder geprüft, ob der entschlüsselte Rückgabewert DEC(ENC(W, SK), SKᵢ) dem gesendeten ersten Wert W entspricht.

Dieser Prozess wird solange fortgesetzt, bis entweder alle Schlüssel SK durchprobiert wurden oder der Token 50 identifiziert ist. Das Verfahren wird mit Schritt D fortgesetzt. Kann keine Übereinstimmung des Rückgabewerts ENC(W, SK) mit einem der symmetrischen Schlüssel SK festgestellt werden, so hat sich der Token 50 nicht erfolgreich identifizieren können und das Lesegerät 10 verweigert den Zutritt und steuert das Verriegelungsmittel 30 nicht an.

Figur 5b zeigt eine weitere Variante des Verfahrens zur Authentifizierung des Tokens 50 durch das Lesegerät 10 entsprechend Schritt C (S130, S230). Der Rückgabewert ENC(W, SK), den das Lesegerät 10 vom Token 50 empfängt, wird mit den verschlüsselten ersten Werten ENC(W, SK) einer Liste verglichen, welche in dem internen Speicher 14 des Lesegeräts 10 gespeichert ist. Ähnlich wie in dem Verfahren, der Figur 5a, inkrementiert das Lesegerät den Zähler i so lange bis der Rückgabewert ENC(W, SK) mit dem entsprechenden verschlüsselten Wert ENC(W, SKᵢ) übereinstimmt. Ist dies der Fall, so ist der Token 50 identifiziert. Das Verfahren wird mit Schritt D fortgesetzt. Kann keine Übereinstimmung des Rückgabewerts ENC(W, SK) mit einem der symmetrischen Schlüssel SK festgestellt werden, so hat sich der Token 50 nicht erfolgreich identifizieren können und das Lesegerät 10 verweigert den Zutritt und steuert das Verriegelungsmittel 30 nicht an.

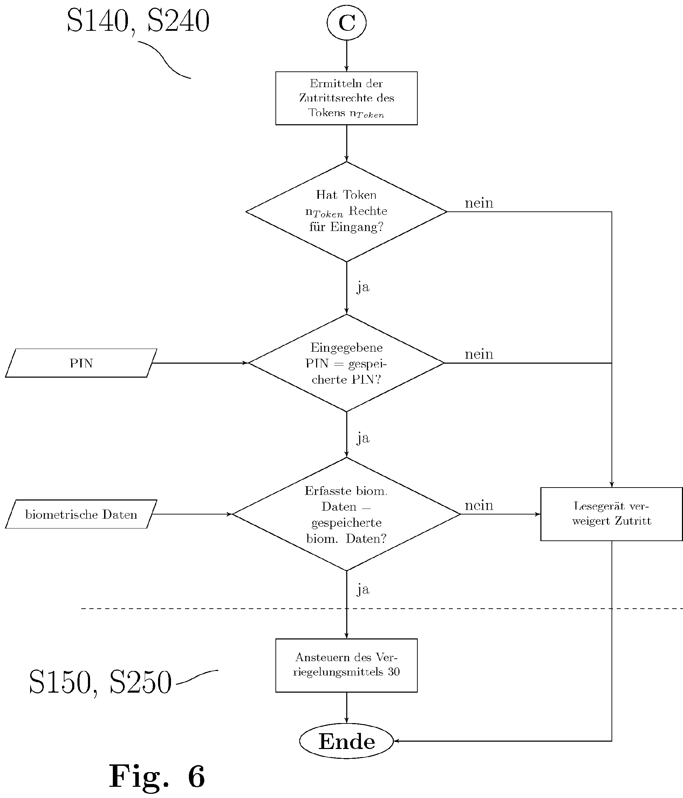

Figur 6 zeigt ein Verfahren anhand eines Ablaufdiagramms, welches einer Variante der Teilschritte S140, S240 und S150, S250 entspricht. Hat das Lesegerät 10 den Token 50 in Schritt C erfolgreich identifiziert, so werden zunächst die Zugriffsrechte, die dem Token 50 zugeordnet sind, ermittelt. Die Zutrittsrechte sind dabei entweder in dem internen Speicher 14 des Lesegeräts 10, in dem nicht-volatilen, internen Speicher 54 des Tokens 50 oder in einer Datenbank 100 bzw. einer zentralen Zutrittsverwaltung, mit der das Lesegerät 10 kommunikativ verbunden ist, gespeichert. Liegen für den Token 50 Zutrittsrechte für den Eingang, an dem sich das Lesegerät 10 befindet, vor, so wird überprüft, ob eine am Lesegerät 10 oder am Token 50 eingegebene PIN mit einer gespeicherten PIN, welche dem Token 50 zugeordnet ist, übereinstimmt. Die PIN ist dabei entweder in dem internen Speicher 14 des Lesegeräts 10, in dem nicht-volatilen, internen Speicher 54 des Tokens 50 oder in einer Datenbank 100 bzw. einer zentralen Zutrittsverwaltung, mit der das Lesegerät 10 kommunikativ verbunden ist, gespeichert. Stimmt die eingegebene PIN der gespeicherten PIN überein, so werden die biometrischen Daten des Tokeninhabers mit den gespeicherten biometrischen Daten, welche dem Token zugeordnet sind, verglichen. Die biometrischen Daten sind dabei entweder in dem internen Speicher 14 des Lesegeräts 10, in dem nicht-volatilen, internen Speicher 54 des Tokens 50 oder in einer Datenbank 100 bzw. einer zentralen Zutrittsverwaltung, mit der das Lesegerät 10 kommunikativ verbunden ist, gespeichert. Ist auch diese Überprüfung erfolgreich, so steuert das Lesegerät das Verriegelungsmittel 30 mittels des Steuermittels 18 an und gewährt Zutritt. Fällt eine der vorherigen Überprüfungen negativ aus, so verweigert das Lesegerät 10 dem Tokeninhaber den Zutritt.

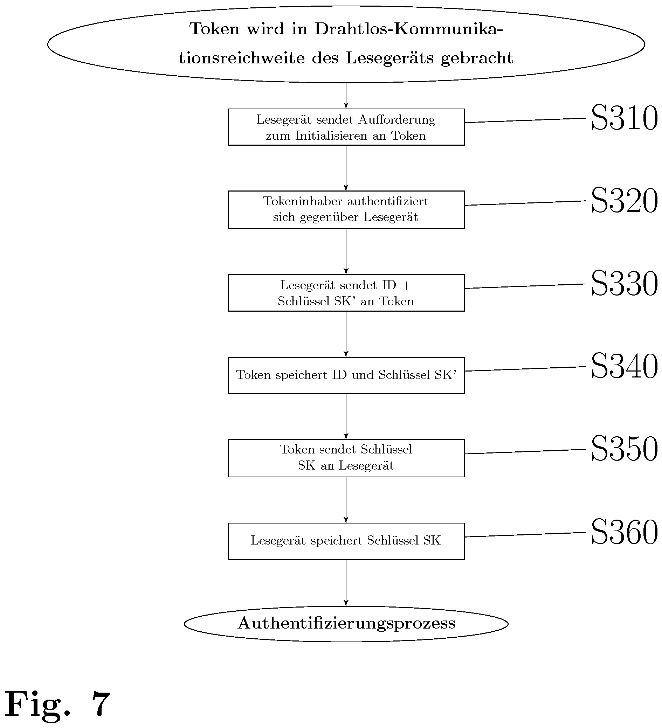

Figur 7 zeigt ein Ablaufdiagramm, welches den Paarungsprozess zwischen dem Token 50 und dem Lesegerät 10 darstellt. Wird der Token in die Drahtloskommunikationsreichweite der Drahtloskommunikationsschnittstelle 16 des Lesegeräts 10 gebracht, so sendet entweder das Lesegerät 10 eine Aufforderung zum Paaren an den Token 10 (S310) oder der Token 50 sendet eine Aufforderung zum Paaren an das Lesegerät 10. Daraufhin authentifiziert sich der Tokeninhaber gegenüber dem Lesegerät 10 (S320). Dieses Authentifizieren kann beispielsweise durch das Überprüfen eines Personalausweises oder durch Sichtprüfung durch eine zentrale Zutrittsverwaltung erfolgen. Das Authentifizieren kann in verschiedenen Ausführungsformen der Erfindung beliebig komplex und an die Sicherheitsbestimmungen des zu schützenden Objekts angepasst sein.

Hat sich der Tokeninhaber gegenüber dem Lesegerät 10 erfolgreich authentifiziert, so sendet das Lesegerät 10 seine ID und gegebenenfalls seinen Schlüssel SK' an den Token 50 (S330). Der Token 50 speichert die ID und den Schlüssel SK' in seinem nicht-volatilen, internen Speicher 54 (S340) und sendet dann seinen Schlüssel SK an das Lesegerät 10 (S350). Der Schlüssel SK wird vom Lesegerät im internen Speicher 14 des Lesegeräts 10 oder, falls das Lesegerät 10 mit einer Datenbank 100 bzw. einer zentralen Zutrittsverwaltung verbunden ist, in einem Speicher der Datenbank 100 bzw. der zentralen Zutrittsverwaltung gespeichert.

In einer weiteren Ausführungsform der Erfindung wird während des Paarungsprozesses das zwischen dem Token 50 und dem Lesegerät 10 ein geteiltes, gemeinsames Geheimnis vereinbart und ausgetauscht.

### BEZUGSZEICHENLISTE

10: Lesegerät
12: Prozessor
14: interner Speicher des Lesegeräts
16: Drahtloskommunikationsschnittstelle
18: Steuerungsmittel
30: Verriegelungsmittel
50: Token
52: Prozessor
54: Speicher
56: Drahtloskommunikationsschnittstelle
100: Datenbank
S110: Senden des ersten Wertes W und der Lesegerät-ID von Lesegerät an Token
S120: Identifikation des Lesegeräts anhand der ID durch Token
S122: Verschlüsseln von W mit symmetrischen Schlüssel SK durch Token
S124: Senden des verschlüsselten ersten Wertes als Rückgabewert von Token an Lesegerät
S130: Lesegerät sucht Schlüssel um Token zu identifizieren
S140: Lesegerät erteilt/verweigert Token Zutritt
S150: Lesegerät steuert Verriegelungsmittel an
S208: Lesegerät verschlüsselt ersten Wert W mit symmetrischen Schlüssel SK'
S210: Senden des ersten Wertes W und der Lesegerät-ID von Lesegerät an Token
S220: Identifikation des Lesegeräts anhand der ID durch Token
S221: Token entschlüsselt verschlüsselten ersten Wert W mit SK'
S222: Verschlüsseln von W mit symmetrischen Schlüssel SK durch Token
S224: Senden des verschlüsselten ersten Wertes als Rückgabewert von Token an Lesegerät
S230: Lesegerät sucht Schlüssel um Token zu identifizieren
S240: Lesegerät erteilt/verweigert Token Zutritt
S250: Lesegerät steuert Verriegelungsmittel an
S310: Lesegerät sendet Aufforderung zum Initialisieren an Token
S320: Tokeninhaber authentifiziert sich gegenüber Lesegerät
S330: Lesegerät sendet ID + Schlüssel SK' an Token
S340: Token speichert ID und Schlüssel SK'
S350: Token sendet Schlüssel SK an Lesegerät
S360: Lesegerät speichert Schlüssel SK
DEC(ENC(W, SK), SKᵢ): entschlüsselter Rückgabewert
ENC(W, SK): Rückgabewert, verschlüsselter erster Wert
ID: Identifikationsnummer des Lesegeräts
N_{L}: Anzahl
Nₜₕ: Schwellenwert
PIN: Persönliche Identifikationsnummer
RN: Zufallszahl
SK: Schlüssel
SK': Schlüssel
T: Zeit
t: Zeit
T': Zeit
W: erster Wert

## Patentansprüche

1. Verfahren zur Zutrittskontrolle einer Personengruppe mittels mehrerer Lesegeräte (10) und mehrerer Token (50),
wobei die Lesegeräte (10) jeweils einen Prozessor (12), einen internen Speicher (14), eine Drahtloskommunikationsschnittstelle (16) zur Drahtloskommunikation mit den Token (50) und ein Steuermittel (18) zum Ansteuern von einem Verriegelungsmittel (30) aufweisen, wobei jedem Lesegerät (10) eine das jeweilige Lesegerät (10) identifizierende Identifizierungsnummer (ID) zugewiesen ist,
wobei die Token (50) jeweils einen Prozessor (52), einen nicht-volatilen, internen Speicher (54) und eine Drahtloskommunikationsschnittstelle (56) zur Drahtloskommunikation mit den Lesegeräten (10) aufweisen, wobei in den nicht-volatilen, internen Speichern (54) der Token (50) jeweils ein symmetrischer Schlüssel (SK) gespeichert ist, der dem jeweiligen Token (50) zugeordnet ist,
wobei die Token (50) mit den Lesegeräten (10) gepaart sind, wobei in den nicht-volatilen, internen Speichern (54) der Token (50) jeweils die Identifikationsnummern (ID) der Lesegeräte (10) gespeichert sind, die mit dem jeweiligen Token (50) gepaart sind, und wobei in den internen Speichern (14) der Lesegeräte (10) jeweils die symmetrischen Schlüssel (SK) der Token (50) gespeichert sind, die mit dem jeweiligen Lesegerät (10) gepaart sind,
wobei zum Paaren des Tokens (50) mit dem Lesegerät (10) in einem Paarungsprozess der symmetrische Schlüssel (SK), welcher dem Token (50) zugeordnet ist, ein symmetrischer Schlüssel (SK'), welcher dem Lesegerät (10) zugeordnet ist, und die Identifikationsnummer (ID) des Lesegeräts (10) zwischen dem Lesegerät (10) und dem Token (50) ausgetauscht werden, wobei der Paarungsprozess durch das Lesegerät (10) oder den Token (50) initiiert wird,
wobei das Verfahren zur Zutrittskontrolle ein Authentifizieren eines der Token (50) durch eines der Lesegeräte (10) umfasst, wobei das Lesegerät (10) mit dem Token (50) gepaart ist, wobei das Authentifizieren die folgenden Schritte umfasst:
- Erkennen durch das Lesegerät (10), dass sich der Token (50) in einer Drahtloskommunikationsreichweite des Lesegeräts (10) befindet,
- Senden der Identifikationsnummer (ID) des Lesegeräts (10) und eines verschlüsselten ersten Werts (W) von dem Lesegerät (10) an den Token (50) mittels der Drahtloskommunikation über die Drahtloskommunikationsschnittstellen (16, 56) des Lesegeräts (10) und des Tokens (50), wobei der erste Wert (W) eine Zufallszahl (RN) umfasst,
- Identifizieren des Lesegeräts (10) durch den Token (50) mittels des Prozessors (52) des Tokens (50) anhand eines Vergleichs der an den Token (50) gesendeten Identifikationsnummer (ID) des Lesegeräts (10) mit den in dem nicht-volatilen, internen Speicher (54) des Tokens (50) gespeicherten Identifikationsnummern (ID) der Lesegeräte (10), mit denen der Token (50) gepaart ist,
- Generieren eines Rückgabewerts (ENC(W, SK)) durch den Token (50), wobei der Rückgabewert (ENC(W, SK)) den ersten Wert (W) verschlüsselt umfasst, wobei das Verschlüsseln des ersten Werts (W) durch den Prozessor (52) des Tokens (50) mit dem den Token (50) identifizierenden, symmetrischen Schlüssel (SK) erfolgt und der symmetrische Schlüssel (SK) in dem nicht-volatilen, internen Speicher (54) des Tokens (50) gespeichert ist,
- Senden des Rückgabewerts (ENC(W, SK)) von dem Token (50) an das Lesegerät (10) mittels der Drahtloskommunikation über die Drahtloskommunikationsschnittstellen (16, 56) des Lesegeräts (10) und des Tokens (50),
- Identifizieren des Tokens (50) durch das Lesegerät (50) anhand des Rückgabewerts (ENC(W, SK)) durch den Prozessor (12) des Lesegeräts, wobei das Lesegerät (10) die in dem internen Speicher (14) des Lesegeräts (10) gespeicherten symmetrischen Schlüssel (SK) zum Entschlüsseln des Rückgabewerts (ENC(W, SK)) durchprobiert, wobei jeder symmetrische Schlüssel (SK) jeweils einem mit dem Lesegerät (10) gepaarten Token (50) eindeutig zugeordnet ist, bis ein entschlüsselter Rückgabewert (DEC(ENC(W, SK), SK)) dem an den Token (50) gesendeten ersten Wert (W) entspricht,
- Ansteuern des Verriegelungsmittels (30) durch das Lesegerät (10) mittels des Steuermittels (18) des Lesegeräts (10) unter der Voraussetzung, dass die Identifikation des Tokens (50) erfolgreich war,
wobei den Lesegeräten (10) jeweils einer der symmetrischen Schlüssel (SK') zugeordnet ist, wobei in den nicht-volatilen, internen Speichern (54) der Token (50) jeweils die symmetrischen Schlüssel (SK') der Lesegeräte (10) gespeichert sind, die mit dem jeweiligen Token (50) gepaart sind,
wobei vor dem Senden der Identifikationsnummer (ID) und des ersten Werts (W) von dem Lesegerät (10) an den mit dem Lesegerät gepaarten Token (50) der erste Wert (W) durch das Lesegerät (10) mittels des Prozessors (12) des Lesegeräts (10) mit dem, dem Lesegerät (10) zugeordneten, symmetrischen Schlüssel (SK') verschlüsselt wird, wobei der verschlüsselte erste Wert (W) nach dem Empfang durch den Token (50) von dem Token (50) mit dem, dem Lesegerät (10) zugeordneten, in dem nicht-volatilen, internen Speicher (54) des Tokens (50) gespeicherten, symmetrischen Schlüssel (SK') des Lesegeräts (10) entschlüsselt wird, wobei das Entschlüsseln des ersten Werts (W) durch den Prozessor (52) des Tokens (50) erfolgt,
wobei in dem internen Speicher (14) des Lesegeräts (10) und in dem nicht-volatilen, internen Speicher (54) des Tokens (50) ein geteiltes, gemeinsames Geheimnis gespeichert ist, wobei das geteilte, gemeinsame Geheimnis und die Zufallszahl (RN) gemeinsam als kombinierter erster Wert (W) durch den Prozessor (52) des Tokens (50) verschlüsselt werden und den Rückgabewert (ENC(W, SK)) generieren.

2. Verfahren nach Anspruch 1, wobei jedem Token (50) individuelle Zugriffsrechte zugeordnet sind,
wobei die Zugriffsrechte in dem nicht-volatilen, internen Speicher (54) des Tokens (50) gespeichert sind und der Token (50) die Zugriffsrechte verschlüsselt an das Lesegerät (10) sendet, oder wobei die Zugriffsrechte in dem internen Speicher (14) des Lesegeräts (10) oder in einer Datenbank (100) gespeichert sind, mit welcher das Lesegerät (10) kommunikativ verbunden ist,
wobei das Lesegerät (10) vor dem Ansteuern des Verriegelungsmittels (30) mittels des Steuermittels (18) des Lesegeräts (10) die Zugriffsrechte des Tokens (50) überprüft und die erfolgreiche Überprüfung der Zugriffsrechte eine weitere Voraussetzung des Ansteuerns des Verriegelungsmittels (30) durch das Lesegerät (10) mittels des Steuermittels (18) des Lesegeräts (10) ist.

3. Verfahren nach einem der vorherigen Ansprüche, wobei eine erfolgreiche Überprüfung von biometrischen Merkmalen eines Tokeninhabers eine weitere Voraussetzung des Ansteuerns des Verriegelungsmittels (30) durch das Lesegerät (10) mittels des Steuermittels (18) des Lesegeräts (10) ist, wobei die biometrischen Merkmale des Tokeninhabers durch ein Sensormittel zur Erfassung von biometrischen Merkmalen erfasst werden und die Überprüfung durch einen Vergleich von gespeicherten biometrischen Merkmalen des Tokeninhabers mit den erfassten biometrischen Merkmalen durchgeführt wird, wobei
- das Sensormittel zur Erfassung von biometrischen Merkmalen von dem Token (50) umfasst ist, die gespeicherten biometrischen Merkmale des Tokeninhabers in dem nicht-volatilen, internen Speicher (54) des Tokens gespeichert sind und der Vergleich der erfassten biometrischen Merkmale mit den gespeicherten biometrischen Merkmalen durch den Prozessor (52) des Tokens (50) durchgeführt wird, wobei das Ergebnis der Überprüfung mittels der Drahtloskommunikation verschlüsselt an das Lesegerät (10) gesendet wird; oder
- das Sensormittel zur Erfassung von biometrischen Merkmalen von dem Token (50) umfasst ist, die gespeicherten biometrischen Merkmale des Tokeninhabers in dem internen Speicher (14) des Lesegeräts (10) oder in einer Datenbank (100), mit welcher das Lesegerät (10) kommunikativ verbunden ist, gespeichert sind, wobei die erfassten biometrischen Merkmale verschlüsselt von dem Token (50) mittels der Drahtloskommunikation an das Lesegerät (10) gesendet werden und der Vergleich der erfassten biometrischen Merkmale mit den gespeicherten biometrischen Merkmalen durch den Prozessor (12) des Lesegeräts (10) durchgeführt wird nachdem der Token (50) durch das Lesegerät (10) erfolgreich identifiziert wurde; oder
- das Sensormittel zur Erfassung von biometrischen Merkmalen von dem Lesegerät umfasst ist, die gespeicherten biometrischen Daten in dem nicht-volatilen, internen Speicher (54) des Tokens (50) gespeichert sind und der Vergleich der erfassten biometrischen Merkmale mit den gespeicherten biometrischen Merkmalen durch den Prozessor (12) des Lesegeräts (10) durchgeführt wird, wobei die gespeicherten biometrischen Merkmale mittels der Drahtloskommunikation verschlüsselt von dem Token (50) an das Lesegerät (10) gesendet werden; oder
- das Sensormittel zur Erfassung von biometrischen Merkmalen von dem Lesegerät umfasst ist, die gespeicherten biometrischen Merkmalen in dem internen Speicher (14) des Lesegeräts (10) oder in einer Datenbank (100), mit welcher das Lesegerät (10) kommunikativ verbunden ist, gespeichert sind und der Vergleich der erfassten biometrischen Merkmale mit den gespeicherten biometrischen Merkmalen durch den Prozessor (12) des Lesegeräts (10) durchgeführt wird nachdem der Token (50) durch das Lesegerät (10) erfolgreich identifiziert wurde.

4. Verfahren nach einem der vorherigen Ansprüche, wobei eine erfolgreiche Überprüfung einer persönlichen Identifikationsnummer des Tokeninhabers eine weitere Voraussetzung des Ansteuerns des Verriegelungsmittels (30) durch das Lesegerät (10) mittels des Steuermittels (18) des Lesegeräts (10) ist, wobei die persönliche Identifikationsnummer des Tokeninhabers durch ein Sensormittel zur Erfassung von Identifikationsnummern erfasst wird und die Überprüfung durch einen Vergleich von einer gespeicherten persönlichen Identifikationsnummer des Tokeninhabers mit der erfassten persönlichen Identifikationsnummer durchgeführt wird, wobei
- das Sensormittel zur Erfassung von Identifikationsnummern von dem Token (50) umfasst ist, die gespeicherte persönliche Identifikationsnummer des Tokeninhabers in dem nicht-volatilen, internen Speicher (54) des Tokens gespeichert ist und der Vergleich der erfassten persönlichen Identifikationsnummer mit der gespeicherten persönlichen Identifikationsnummer durch den Prozessor (52) des Tokens (50) durchgeführt wird, wobei das Ergebnis der Überprüfung mittels der Drahtloskommunikation verschlüsselt an das Lesegerät (10) gesendet wird; oder
- das Sensormittel zur Erfassung von Identifikationsnummern von dem Token (50) umfasst ist, die gespeicherte persönliche Identifikationsnummer des Tokeninhabers in dem internen Speicher (14) des Lesegeräts (10) oder in einer Datenbank (100), mit welcher das Lesegerät (10) kommunikativ verbunden ist, gespeichert ist, wobei die erfasste persönliche Identifikationsnummer verschlüsselt von dem Token (50) mittels der Drahtloskommunikation an das Lesegerät (10) gesendet wird und der Vergleich der erfassten persönlichen Identifikationsnummer mit der gespeicherten persönlichen Identifikationsnummer durch den Prozessor (12) des Lesegeräts (10) durchgeführt wird nachdem der Token (50) durch das Lesegerät (10) erfolgreich identifiziert wurde; oder
- das Sensormittel zur Erfassung von Identifikationsnummern von dem Lesegerät umfasst ist, die gespeicherte persönliche Identifikationsnummer in dem nicht-volatilen, internen Speicher (54) des Tokens (50) gespeichert ist und der Vergleich der erfassten persönlichen Identifikationsnummer mit den gespeicherten persönlichen Identifikationsnummer durch den Prozessor (12) des Lesegeräts (10) durchgeführt wird, wobei die gespeicherte persönliche Identifikationsnummer mittels der Drahtloskommunikation verschlüsselt von dem Token (50) an das Lesegerät (10) gesendet wird; oder
- das Sensormittel zur Erfassung von Identifikationsnummern von dem Lesegerät umfasst ist, die gespeicherte persönliche Identifikationsnummer in dem internen Speicher (14) des Lesegeräts (10) oder in einer Datenbank (100), mit welcher das Lesegerät (10) verbunden ist, gespeichert ist und der Vergleich der erfassten persönlichen Identifikationsnummer mit der gespeicherten persönlichen Identifikationsnummer durch den Prozessor (12) des Lesegeräts (10) durchgeführt wird nachdem der Token (50) durch das Lesegerät (10) erfolgreich identifiziert wurde.

5. Verfahren nach einem der vorherigen Ansprüche, wobei zum Paaren des Tokens (50) mit dem Lesegerät (10) in dem Paarungsprozess das zwischen dem Lesegerät (10) und dem Token (50) geteilte, gemeinsame Geheimnis zwischen dem Lesegerät (10) und dem Token (50) ausgetauscht wird.

6. Verfahren nach einem der vorherigen Ansprüche, wobei der symmetrische Schlüssel (SK), welcher dem Token zugeordnet ist, der symmetrische Schlüssel (SK'), welcher dem Lesegerät zugeordnet ist, die Identifikationsnummer (ID) des Lesegeräts (10) und/oder das zwischen dem Lesegerät (10) und dem Token (50) geteilte, gemeinsame Geheimnis in dem Paarungsprozess mittels der Drahtloskommunikation und unter Verwendung von asymmetrischen kryptografischen Verfahren mittels der Drahtloskommunikation ausgehandelt werden und/oder
wobei der Paarungsprozess des Tokens (50) mit dem Lesegerät (10) erneut durchgeführt werden muss, wenn eine festgelegte Zeit T seit der vorherigen Paarung vergangen ist und/oder eine festgelegte Anzahl (n) von Authentifizierungsversuchen mit den Token (50) durchgeführt wurden.

7. Verfahren nach einem der vorherigen Ansprüche, wobei durch das Lesegerät (10) eine oder mehrere Zufallszahlen (RN) in einem dem Senden des ersten Werts (W) vorausgehenden Schritt bestimmt werden und für jeden mit dem Lesegerät (10) gepaarten Token (50) der mindestens eine erste Wert (W) verschlüsselt in dem internen Speicher (14) des Lesegeräts (10) gespeichert wird, wobei jeder erste Wert (W) eine der Zufallszahlen (RN) umfasst.

8. Verfahren nach Anspruch 7, wobei das Bestimmen der einen oder mehreren Zufallszahlen (RN) und das Speichern des mindestens einen verschlüsselten ersten Werts (W) für jeden mit dem Lesegerät (10) gepaarten Token (50) in dem internen Speicher (14) des Lesegeräts (10) in einem festgelegten Zeitfenster erfolgt und/oder zu einem Zeitpunkt, wenn keine Authentifizierungsversuche durchgeführt werden.

9. Verfahren nach einem der vorherigen Ansprüche, wobei das Lesegerät (10) die Zufallszahl (RN) für das Verfahren der Zutrittskontrolle verwendet, bis für die Identifikation des Tokens (50) zu einem zweiten Mal die gleiche Zufallszahl (RN) verwendet wird und/oder bis alle mit dem Lesegerät (10) gepaarten Token (50) diese Zufallszahl (RN) für einen Authentifizierungsversuch verwendet haben und/oder bis eine Zeit (T') abgelaufen ist und/oder bis eine vorher festgelegte Anzahl (n') an Authentifizierungsversuchen mit der Zufallszahl (RN) durchgeführt wurde und dann eine neue Zufallszahl (RN) für das Verfahren der Zutrittskontrolle verwendet.

10. Verfahren nach Anspruch 9, wobei, wenn für die Identifizierung des Tokens (50) zu dem zweiten Mal die gleiche Zufallszahl (RN) verwendet wird, die Identifizierung des Tokens (50) mit der neuen Zufallszahl (RN) wiederholt wird.

11. Lesegerät (10) zur Zutrittskontrolle einer Personengruppe mittels mehreren Token (50),
wobei das Lesegerät (10) einen Prozessor (12), einen internen Speicher (14), eine Drahtloskommunikationsschnittstelle (16) zur Drahtloskommunikation mit den Token (50) und ein Steuermittel (18) zum Ansteuern von einem Verriegelungsmittel (30) aufweist, wobei dem Lesegerät (10) eine das Lesegerät (10) identifizierende Identifizierungsnummer (ID) zugewiesen ist,
wobei die Token (50) mit dem Lesegerät (10) gepaart sind, wobei in den nicht-volatilen, internen Speichern (54) der Token (50) jeweils die Identifikationsnummer (ID) des Lesegerätes (10) gespeichert ist, das mit dem jeweiligen Token (50) gepaart ist, und wobei in dem internen Speicher (14) des Lesegeräts (10) die symmetrischen Schlüssel (SK) der Token (50) gespeichert sind, die mit dem Lesegerät (10) gepaart sind,
wobei zum Paaren des Tokens (50) mit dem Lesegerät (10) in einem Paarungsprozess der symmetrische Schlüssel (SK), welcher dem Token (50) zugeordnet ist, ein symmetrischer Schlüssel (SK'), welcher dem Lesegerät (10) zugeordnet ist, und die Identifikationsnummer (ID) des Lesegeräts (10) zwischen dem Lesegerät (10) und dem Token (50) ausgetauscht werden, wobei der Paarungsprozess durch das Lesegerät (10) oder den Token (50) initiiert wird,
wobei das Lesegerät (10) dazu konfiguriert ist ein Verfahren zur Zutrittskontrolle auszuführen, welches ein Authentifizieren eines der Token (50) durch das Lesegerät (10) umfasst, wobei der Token (50) mit dem Lesegerät (10) gepaart ist, wobei das Authentifizieren die folgenden Schritte umfasst:
- Erkennen, dass sich der Token (50) in der Drahtloskommunikationsreichweite des Lesegeräts (10) befindet,
- Senden der Identifikationsnummer (ID) des Lesegeräts (10) und eines verschlüsselten ersten Werts (W) an den Token (50) mittels der Drahtloskommunikation über die Drahtloskommunikationsschnittstelle (16) des Lesegeräts (10), wobei der erste Wert (W) eine Zufallszahl (RN) umfasst,
- Empfangen eines mit dem symmetrischen Schlüssel (SK) des Tokens (50) verschlüsselten Rückgabewerts (ENC(W, SK)) von dem Token (50) mittels der Drahtloskommunikation über die Drahtloskommunikationsschnittstelle (16) des Lesegeräts (10), wobei der Rückgabewert (ENC(W, SK)) den ersten Wert (W) verschlüsselt umfasst,
- Identifizieren des Tokens (50) anhand des Rückgabewerts (ENC(W, SK)) durch den Prozessor (12) des Lesegeräts (10),
wobei das Lesegerät (10) die in dem internen Speicher (14) des Lesegeräts (10) gespeicherten symmetrischen Schlüssel (SK) zum Entschlüsseln des Rückgabewerts (ENC(W, SK)) durchprobiert, wobei jeder symmetrische Schlüssel (SK) jeweils einem mit dem Lesegerät (10) gepaarten Token (50) eindeutig zugeordnet ist, bis ein entschlüsselter Rückgabewert (DEC(ENC(W, SK), SK)) dem an den Token (50) gesendeten ersten Wert (W) entspricht,
- Ansteuern des Verriegelungsmittels (30) mittels des Steuermittels (18) des Lesegeräts (10) unter der Voraussetzung, dass die Identifikation des Tokens (50) erfolgreich war,
wobei dem Lesegeräte (10) der symmetrischer Schlüssel (SK') zugeordnet ist, wobei in den nicht-volatilen, internen Speichern (54) der Token (50) jeweils der symmetrische Schlüssel (SK') des Lesegeräts (10) gespeichert ist, das mit dem Token (50) gepaart ist,
wobei vor dem Senden der Identifikationsnummer (ID) und des ersten Werts (W) von dem Lesegerät (10) an den mit dem Lesegerät gepaarten Token (50) der erste Wert (W) durch das Lesegerät (10) mittels des Prozessors (12) des Lesegeräts (10) mit dem, dem Lesegerät (10) zugeordneten, symmetrischen Schlüssel (SK') verschlüsselt wird,
wobei in dem internen Speicher (14) des Lesegeräts (10) und in dem nicht-volatilen, internen Speicher (54) des Tokens (50) ein geteiltes, gemeinsames Geheimnis gespeichert ist, wobei das geteilte, gemeinsame Geheimnis und die Zufallszahl (RN) gemeinsam als kombinierter erster Wert (W) verschlüsselt sind und den Rückgabewert (ENC(W, SK)) generieren.

12. Token (50) für die Zutrittskontrolle einer Personengruppe mittels mehrerer Lesegeräte (10) und mehrerer Token (50),
wobei der Token (50) einen Prozessor (52), einen nicht-volatilen, internen Speicher (54) und eine Drahtloskommunikationsschnittstelle (56) zur Drahtloskommunikation mit einem Lesegerät (10) aufweist, wobei in dem nicht-volatilen, internen Speicher (54) des Tokens (50) ein symmetrischer Schlüssel (SK) gespeichert ist, wobei der symmetrische Schlüssel (SK) dem Token (50) zugeordnet ist,
wobei der Token (50) mit den Lesegeräten (10) gepaart ist, wobei in dem nicht-volatilen, internen Speicher (54) des Tokens (50) die Identifikationsnummern (ID) der Lesegeräte (10) gespeichert sind, die mit dem Token (50) gepaart sind, und wobei in den internen Speichern (14) der Lesegeräte (10) jeweils der symmetrische Schlüssel (SK) des Tokens (50) gespeichert ist, welcher mit dem jeweiligen Lesegerät (10) gepaart ist,
wobei zum Paaren des Tokens (50) mit dem Lesegerät (10) in einem Paarungsprozess der symmetrische Schlüssel (SK), welcher dem Token (50) zugeordnet ist, ein symmetrischer Schlüssel (SK'), welcher dem Lesegerät (10) zugeordnet ist, und die Identifikationsnummer (ID) des Lesegeräts (10) zwischen dem Lesegerät (10) und dem Token (50) ausgetauscht werden, wobei der Paarungsprozess durch das Lesegerät (10) oder den Token (50) initiiert wird,
wobei der Token (50) konfiguriert ist ein Verfahren zur Zutrittskontrolle auszuführen, wobei das Verfahren eine Authentifizierung des Tokens (50) durch eines der Lesegeräte (10) umfasst, wobei der Token (50) mit dem Lesegerät (10) gepaart ist, wobei das Authentifizieren die folgenden Schritte umfasst:
- Einkoppeln des Tokens (50) in die Drahtloskommunikation des Lesegeräts (10) und Versorgen des Tokens (50) mit einer Betriebsspannung zum Betrieb des Prozessors (52) und des nicht-volatilen, internen Speichers (54) mittels der Drahtloskommunikation,
- Empfangen der Identifikationsnummer (ID) des Lesegeräts (10) und eines verschlüsselten ersten Werts (W) von dem Lesegerät (10) mittels der Drahtloskommunikation über die Drahtloskommunikationsschnittstelle (56) des Tokens (50), wobei der erste Wert (W) eine Zufallszahl (RN) umfasst,
- Identifizieren des Lesegeräts (10) durch den Token (50) mittels des Prozessors (52) des Tokens (50) anhand eines Vergleichs der an den Token (50) gesendeten Identifikationsnummer (ID) des Lesegeräts (10) mit den in dem nicht-volatilen, internen Speicher (54) des Tokens (50) gespeicherten Identifikationsnummern (ID) der Lesegeräte (10), mit denen der Token (50) gepaart ist,
- Generieren eines Rückgabewerts (ENC(W, SK)) durch den Token (50), wobei der Rückgabewert (ENC(W, SK)) den ersten Wert (W) verschlüsselt umfasst, wobei das Verschlüsseln des ersten Werts (W) durch den Prozessor (52) des Tokens (50) mit dem den Token (50) identifizierenden, symmetrischen Schlüssel (SK) erfolgt und der symmetrische Schlüssel (SK) in dem nicht-volatilen, internen Speicher des TK gespeichert ist,
- Senden des Rückgabewerts (ENC(W, SK)) von dem Token (50) an das Lesegerät (10) mittels der Drahtloskommunikation über die Drahtloskommunikationsschnittstelle (56) des Tokens (50) zum Identifizieren des Tokens (50) durch das Lesegerät (50) anhand des Rückgabewerts (ENC(W, SK)), wobei das Lesegerät (10) die in dem internen Speicher (14) des Lesegeräts (10) gespeicherten symmetrischen Schlüssel (SK) zum Entschlüsseln des Rückgabewerts (ENC(W, SK)) durchprobiert, bis ein entschlüsselter Rückgabewert (DEC(ENC(W, SK), SK)) dem an den Token (50) gesendeten ersten Wert (W) entspricht,
wobei den Lesegeräten (10) jeweils einer der symmetrischer Schlüssel (SK') zugeordnet ist, wobei in dem nicht-volatilen, internen Speicher (54) des Tokens (50) die symmetrischen Schlüssel (SK') der Lesegeräte (10) gespeichert sind, die mit dem Token (50) gepaart sind,
wobei der von dem Lesegerät (10) empfangene erste Wert (W) durch das Lesegerät (10) mit dem, dem Lesegerät (10) zugeordneten, symmetrischen Schlüssel (SK') verschlüsselt ist, wobei der verschlüsselte erste Wert (W) nach dem Empfang durch den Token (50) von dem Token (50) mit dem, dem Lesegerät (10) zugeordneten, in dem nicht-volatilen, internen Speicher (54) des Tokens (50) gespeicherten, symmetrischen Schlüssel (SK') des Lesegeräts (10) entschlüsselt wird, wobei das Entschlüsseln des ersten Werts (W) durch den Prozessor (52) des Tokens (50) erfolgt,
wobei in dem internen Speicher (14) des Lesegeräts (10) und in dem nicht-volatilen, internen Speicher (54) des Tokens (50) ein geteiltes, gemeinsames Geheimnis gespeichert ist, wobei das geteilte, gemeinsame Geheimnis und die Zufallszahl (RN) gemeinsam als kombinierter erster Wert (W) durch den Prozessor (52) des Tokens (50) verschlüsselt werden und den Rückgabewert (ENC(W, SK)) generieren.

13. System zur Zutrittskontrolle einer Personengruppe mittels mehrerer Lesegeräte (10) und mehrerer Token (50),
wobei die Lesegeräte (10) jeweils einen Prozessor (12), einen internen Speicher (14), eine Drahtloskommunikationsschnittstelle (16) zur Drahtloskommunikation mit den Token (50) und ein Steuermittel (18) zum Ansteuern von einem Verriegelungsmittel (30) aufweisen, wobei jedem Lesegerät (10) eine das jeweilige Lesegerät (10) identifizierende Identifizierungsnummer (ID) zugewiesen ist,
wobei die Token (50) jeweils einen Prozessor (52), einen nicht-volatilen, internen Speicher (54) und eine Drahtloskommunikationsschnittstelle (56) zur Drahtloskommunikation mit den Lesegeräten (10) aufweisen, wobei in den nicht-volatilen, internen Speichern (54) der Token (50) jeweils ein symmetrischer Schlüssel (SK) gespeichert ist, der dem jeweiligen Token (50) zugeordnet ist,
wobei die Token (50) mit den Lesegeräten (10) gepaart sind, wobei in den nicht-volatilen, internen Speichern (54) der Token (50) jeweils die Identifikationsnummern (ID) der Lesegeräte (10) gespeichert sind, die mit dem jeweiligen Token (50) gepaart sind, und wobei in den internen Speichern (14) der Lesegeräte (10) jeweils die symmetrischen Schlüssel (SK) der Token (50) gespeichert sind, die mit dem jeweiligen Lesegerät (10) gepaart sind,
wobei zum Paaren des Tokens (50) mit dem Lesegerät (10) in einem Paarungsprozess der symmetrische Schlüssel (SK), welcher dem Token (50) zugeordnet ist, ein symmetrischer Schlüssel (SK'), welcher dem Lesegerät (10) zugeordnet ist, und die Identifikationsnummer (ID) des Lesegeräts (10) zwischen dem Lesegerät (10) und dem Token (50) ausgetauscht werden, wobei der Paarungsprozess durch das Lesegerät (10) oder den Token (50) initiiert wird,
wobei das System dazu konfiguriert ist ein Verfahren zur Zutrittskontrolle auszuführen, wobei das Verfahren ein Authentifizieren eines der Token (50) durch eines der Lesegeräte (10) umfasst, wobei das Lesegerät (10) mit dem Token (50) gepaart ist, wobei das Authentifizieren die folgenden Schritte umfasst:
- Erkennen durch das Lesegerät (10), dass sich der Token (50) in einer Drahtloskommunikationsreichweite des Lesegeräts (10) befindet,
- Senden der Identifikationsnummer (ID) des Lesegeräts (10) und eines verschlüsselten ersten Werts (W) von dem Lesegerät (10) an den Token (50) mittels der Drahtloskommunikation über die Drahtloskommunikationsschnittstellen (16, 56) des Lesegeräts (10) und des Tokens (50), wobei der erste Wert (W) eine Zufallszahl (RN) umfasst,
- Identifizieren des Lesegeräts (10) durch den Token (50) mittels des Prozessors (52) des Tokens (50) anhand eines Vergleichs der an den Token (50) gesendeten Identifikationsnummer (ID) des Lesegeräts (10) mit den in dem nicht-volatilen, internen Speicher (54) des Tokens (50) gespeicherten Identifikationsnummern (ID) der Lesegeräte (10), mit denen der Token (50) gepaart ist,
- Generieren eines Rückgabewerts (ENC(W, SK)) durch den Token (50), wobei der Rückgabewert (ENC(W, SK)) den ersten Wert (W) verschlüsselt umfasst, wobei das Verschlüsseln des ersten Werts (W) durch den Prozessor (52) des Tokens (50) mit dem den Token (50) identifizierenden, symmetrischen Schlüssel (SK) erfolgt und der symmetrische Schlüssel (SK) in dem nicht-volatilen, internen Speicher (54) des Tokens (50) gespeichert ist,
- Senden des Rückgabewerts (ENC(W, SK)) von dem Token (50) an das Lesegerät (10) mittels der Drahtloskommunikation über die Drahtloskommunikationsschnittstellen (16, 56) des Lesegeräts (10) und des Tokens (50),
- Identifizieren des Tokens (50) durch das Lesegerät (50) anhand des Rückgabewerts (ENC(W, SK)) durch den Prozessor (12) des Lesegeräts,
wobei das Lesegerät (10) die in dem internen Speicher (14) des Lesegeräts (10) gespeicherten symmetrischen Schlüssel (SK) zum Entschlüsseln des Rückgabewerts (ENC(W, SK)) durchprobiert, wobei jeder symmetrische Schlüssel (SK) jeweils einem mit dem Lesegerät (10) gepaarten Token (50) eindeutig zugeordnet ist, bis ein entschlüsselter Rückgabewert (DEC(ENC(W, SK), SK)) dem an den Token (50) gesendeten ersten Wert (W) entspricht,
- Ansteuern des Verriegelungsmittels (30) durch das Lesegerät (10) mittels des Steuermittels (18) des Lesegeräts (10) unter der Voraussetzung, dass die Identifikation des Tokens (50) erfolgreich war,
wobei den Lesegeräten (10) jeweils einer der symmetrischen Schlüssel (SK') zugeordnet ist, wobei in den nicht-volatilen, internen Speichern (54) der Token (50) jeweils die symmetrischen Schlüssel (SK') der Lesegeräte (10) gespeichert sind, die mit dem jeweiligen Token (50) gepaart sind,
wobei vor dem Senden der Identifikationsnummer (ID) und des ersten Werts (W) von dem Lesegerät (10) an den mit dem Lesegerät gepaarten Token (50) der erste Wert (W) durch das Lesegerät (10) mittels des Prozessors (12) des Lesegeräts (10) mit dem, dem Lesegerät (10) zugeordneten, symmetrischen Schlüssel (SK') verschlüsselt wird, wobei der verschlüsselte erste Wert (W) nach dem Empfang durch den Token (50) von dem Token (50) mit dem, dem Lesegerät (10) zugeordneten, in dem nicht-volatilen, internen Speicher (54) des Tokens (50) gespeicherten, symmetrischen Schlüssel (SK') des Lesegeräts (10) entschlüsselt wird, wobei das Entschlüsseln des ersten Werts (W) durch den Prozessor (52) des Tokens (50) erfolgt,
wobei in dem internen Speicher (14) des Lesegeräts (10) und in dem nicht-volatilen, internen Speicher (54) des Tokens (50) ein geteiltes, gemeinsames Geheimnis gespeichert ist, wobei das geteilte, gemeinsame Geheimnis und die Zufallszahl (RN) gemeinsam als kombinierter erster Wert (W) durch den Prozessor (52) des Tokens (50) verschlüsselt werden und den Rückgabewert (ENC(W, SK)) generieren.

## Claims

1. A method for access control of a group of persons by means of a plurality of readers (10) and a plurality of tokens (50),
wherein the readers (10) each have a processor (12), an internal memory (14), a wireless communication interface (16) for wireless communication with the tokens (50) and a control means (18) for actuating a locking means (30), wherein each reader (10) is assigned an identification number (ID) identifying the respective reader (10),
wherein the tokens (50) each have a processor (52), a non-volatile, internal memory (54) and a wireless communication interface (56) for wireless communication with the readers (10), wherein a symmetric key (SK) is stored in each of the non-volatile, internal memories (54) of the tokens (50) and is assigned to the respective token (50),
wherein the tokens (50) are paired with the readers (10), wherein the identification numbers (ID) of the readers (10) which are paired with the respective token (50) are respectively stored in the non-volatile, internal memories (54) of the tokens (50), and wherein the symmetric keys (SK) of the tokens (50) which are paired with the respective reader (10) are respectively stored in the internal memories (14) of the readers (10),
wherein for pairing the token (50) with the reader (10) in a pairing process, the symmetric key (SK) that is assigned to the reader (10) and the identification number (ID) of the reader (10) are exchanged between the reader (10) and the token (50), wherein the pairing process is initiated by the reader (10) or the token (50),
wherein the access control method comprises authenticating one of the tokens (50) by one of the readers (10), wherein the reader (10) is paired with the token (50), wherein the authenticating comprises the following steps:
- recognising by the reader (10) that the token (50) is within wireless communication range of the reader (10),
- sending the identification number (ID) of the reader (10) and an encrypted first value (W) from the reader (10) to the token (50) by means of the wireless communication via the wireless communication interfaces (16, 56) of the reader (10) and the token (50), wherein the first value (W) comprises a random number (RN),
- identifying the reader (10) by the token (50) by means of the processor (52) of the token (50) using a comparison of the identification number (ID) of the reader (10) sent to the token (50) with the identification numbers (ID) of the readers (10), with which the token (50) is paired, stored in the non-volatile, internal memory (54) of the token (50),
- generating a return value (ENC(W, SK)) by the token (50), wherein the return value (ENC(W, SK)) comprises the first value (W) encrypted, wherein the encryption of the first value (W) is performed by the processor (52) of the token (50) with the symmetric key (SK) identifying the token (50) and the symmetric key (SK) is stored in the **non-**volatile, internal memory (54) of the token (50),
- sending the return value (ENC(W, SK)) from the token (50) to the reader (10) by means of wireless communication via the wireless communication interfaces (16, 56) of the reader (10) and the token (50),
- identifying the token (50) by the reader (50) using the return value (ENC(W, SK)) by the processor (12) of the reader, wherein the reader (10) tries, one by one, the symmetric keys (SK) stored in the internal memory (14) of the reader (10) in order to decrypt the return value (ENC(W, SK)), wherein each symmetric key (SK) is in each case uniquely assigned to a token (50) paired with the reader (10), until a decrypted return value (DEC(ENC(W, SK), SK)) corresponds to the first value (W) sent to the token (50),
- actuating the locking means (30) by the reader (10) by means of the control means (18) of the reader (10) under the condition that the identification of the token (50) was successful,
wherein the readers (10) are each assigned one of the symmetric keys (SK'), wherein the symmetric keys (SK') of the readers (10), which are paired with the respective token (50), are respectively stored in the non-volatile, internal memories (54) of the tokens (50),
wherein before the identification number (ID) and the first value (W) are sent from the reader (10) to the token (50) paired with the reader, the first value (W) is encrypted by the reader (10) by means of the processor (12) of the reader (10) with the symmetric key (SK') assigned to the reader (10), wherein the encrypted first value (W), after being received by the token (50), is decrypted by the token (50) using the symmetric key (SK') of the reader (10) which is assigned to the reader (10) and stored in the non-volatile, internal memory (54) of the token (50), wherein the decryption of the first value (W) is performed by the processor (52) of the token (50),
wherein a shared, common secret is stored in the internal memory (14) of the reader (10) and in the non-volatile, internal memory (54) of the token (50), wherein the shared, common secret and the random number (RN) are jointly encrypted as a combined first value (W) by the processor (52) of the token (50) and generate the return value (ENC(W, SK)).

2. The method according to claim 1,
wherein individual access rights are assigned to each token (50),
wherein the access rights are stored in the non-volatile, internal memory (54) of the token (50) and the token (50) sends the access rights in encrypted form to the reader (10), or wherein the access rights are stored in the internal memory (14) of the reader (10) or in a database (100) to which the reader (10) is communicatively connected,
wherein the reader (10) verifies the access rights of the token (50) before actuating the locking means (30) by means of the control means (18) of the reader (10) and the successful verification of the access rights is a further prerequisite for actuating the locking means (30) by the reader (10) by means of the control means (18) of the reader (10).

3. The method according to any one of the preceding claims, wherein a successful verification of biometric features of a token holder is a further prerequisite of the actuation of the locking means (30) by the reader (10) by means of the control means (18) of the reader (10), wherein the biometric features of the token holder are detected by a sensor means for detecting biometric features and the verification is performed by a comparison of stored biometric features of the token holder with the detected biometric features, wherein
- the sensor means for detecting biometric features is comprised by the token (50), the stored biometric features of the token holder are stored in the non-volatile, internal memory (54) of the token, and the comparison of the detected biometric features with the stored biometric features is performed by the processor (52) of the token (50), wherein the result of the verification is sent encrypted to the reader (10) by means of the wireless communication; or
- the sensor means for detecting biometric features is comprised by the token (50), the stored biometric features of the token holder are stored in the internal memory (14) of the reader (10) or in a database (100) to which the reader (10) is communicatively connected, wherein the detected biometric features are sent in encrypted form from the token (50) to the reader (10) by means of wireless communication and the comparison of the detected biometric features with the stored biometric features is carried out by the processor (12) of the reader (10) after the token (50) has been successfully identified by the reader (10); or
- the sensor means for detecting biometric features is comprised by the reader, the stored biometric data is stored in the non-volatile, internal memory (54) of the token (50), and the comparison of the detected biometric features with the stored biometric features is performed by the processor (12) of the reader (10), wherein the stored biometric features are sent in encrypted form from the token (50) to the reader (10) by means of wireless communication; or
- the sensor means for detecting biometric features is comprised by the reader, the stored biometric features are stored in the internal memory (14) of the reader (10) or in a database (100) to which the reader (10) is communicatively connected, and the comparison of the detected biometric features with the stored biometric features is performed by the processor (12) of the reader (10) after the token (50) has been successfully identified by the reader (10).

4. The method according to any one of the preceding claims, wherein a successful verification of a personal identification number of the token holder is a further prerequisite of the actuation of the locking means (30) by the reader (10) by means of the control means (18) of the reader (10), wherein the personal identification number of the token holder is detected by a sensor means for detecting identification numbers and the verification is performed by a comparison of a stored personal identification number of the token holder with the detected personal identification number, wherein
- the sensor means for detecting identification numbers is comprised by the token (50), the stored personal identification number of the token holder is stored in the non-volatile, internal memory (54) of the token, and the comparison of the detected personal identification number with the stored personal identification number is performed by the processor (52) of the token (50), wherein the result of the verification is sent in encrypted form to the reader (10) by means of the wireless communication; or
- the sensor means for detecting identification numbers is comprised by the token (50), the stored personal identification number of the token holder is stored in the internal memory (14) of the reader (10) or in a database (100) to which the reader (10) is communicatively connected, wherein the detected personal identification number is sent in encrypted form from the token (50) to the reader (10) by means of wireless communication and the comparison of the detected personal identification number with the stored personal identification number is carried out by the processor (12) of the reader (10) after the token (50) has been successfully identified by the reader (10); or
- the sensor means for detecting identification numbers is comprised by the reader, the stored personal identification number is stored in the non-volatile, internal memory (54) of the token (50), and the comparison of the detected personal identification number with the stored personal identification number is performed by the processor (12) of the reader (10), wherein the stored personal identification number is sent in encrypted form from the token (50) to the reader (10) by means of wireless communication; or
- the sensor means for detecting identification numbers is comprised by the reader, the stored personal identification number is stored in the internal memory (14) of the reader (10) or in a database (100) to which the reader (10) is connected, and the comparison of the detected personal identification number with the stored personal identification number is performed by the processor (12) of the reader (10) after the token (50) has been successfully identified by the reader (10).

5. The method according to any one of the preceding claims, wherein for pairing the token (50) with the reader (10) in the pairing process, the common secret shared between the reader (10) and the token (50) is exchanged between the reader (10) and the token (50).

6. The method according to any one of the preceding claims, wherein the symmetric key (SK) assigned to the token, the symmetric key (SK') assigned to the reader, the identification number (ID) of the reader (10) and/or the common secret shared between the reader (10) and the token (50) are negotiated in the pairing process by means of the wireless communication and using asymmetric cryptographic methods by means of the wireless communication, and/or
wherein the pairing process of the token (50) with the reader (10) must be performed again when a fixed time T has elapsed since the previous pairing and/or a fixed number (n) of authentication attempts have been performed with the tokens (50).

7. The method according to any one of the preceding claims, wherein one or more random numbers (RN) are determined by the reader (10) in a step preceding the sending of the first value (W), and for each token (50) paired with the reader (10) the at least one first value (W) is stored in encrypted form in the internal memory (14) of the reader (10), wherein each first value (W) comprises one of the random numbers (RN).

8. The method according to claim 7, wherein the determination of the one or more random numbers (RN) and the storing of the at least one encrypted first value (W) for each token (50) paired with the reader (10) in the internal memory (14) of the reader (10) takes place in a fixed time window and/or at a time when no authentication attempts are performed.

9. The method according to any one of the preceding claims, wherein the reader (10) uses the random number (RN) for the access control method, until the same random number (RN) is used a second time for the identification of the token (50) and/or until all tokens (50) paired with the reader (10) have used this random number (RN) for an authentication attempt and/or until a time (T') has elapsed and/or until a predetermined number (n') of authentication attempts has been carried out with the random number (RN) and then a new random number (RN) is used for the access control method.

10. The method according to claim 9, wherein if the same random number (RN) is used for the identification of the token (50) for the second time, the identification of the token (50) is repeated with the new random number (RN).

11. A reader (10) for access control of a group of persons by means of a plurality of tokens (50),
wherein the reader (10) comprises a processor (12), an internal memory (14), a wireless communication interface (16) for wireless communication with the tokens (50) and a control means (18) for actuating a locking means (30), wherein the reader (10) is assigned an identification number (ID) identifying the reader (10),
wherein the tokens (50) are paired with the reader (10), wherein the identification number (ID) of the reader (10) paired with the respective token (50) is respectively stored in the non-volatile, internal memories (54) of the tokens (50), and wherein the symmetric keys (SK) of the tokens (50) paired with the reader (10) are stored in the internal memory (14) of the reader (10),
wherein for pairing the token (50) with the reader (10) in a pairing process, the symmetric key (SK) that is assigned to the token (50), a symmetric key (SK') that is assigned to the reader (10), and the identification number (ID) of the reader (10) are exchanged between the reader (10) and the token (50), wherein the pairing process is initiated by the reader (10) or the token (50),
wherein the reader (10) is configured to perform an access control method comprising authenticating one of the tokens (50) by the reader (10), wherein the token (50) is paired with the reader (10), wherein the authenticating comprises the following steps:
- recognising that the token (50) is within wireless communication range of the reader (10),
- sending the identification number (ID) of the reader (10) and an encrypted first value (W) to the token (50) by means of the wireless communication via the wireless communication interface (16) of the reader (10), wherein the first value (W) comprises a random number (RN),
- receiving a return value (ENC(W, SK)), encrypted with the symmetric key (SK) of the token (50), from the token (50) by means of the wireless communication via the wireless communication interface (16) of the reader (10), wherein the return value (ENC(W, SK)) comprises the first value (W) in encrypted form,
- identifying the token (50) using the return value (ENC(W, SK)) by the processor (12) of the reader (10),
wherein the reader (10) tries, one by one, the symmetric keys (SK) stored in the internal memory (14) of the reader (10) in order to decrypt the return value (ENC(W, SK)), wherein each symmetric key (SK) is in each case uniquely assigned to a token (50) paired with the reader (10), until a decrypted return value (DEC(ENC(W, SK), SK)) corresponds to the first value (W) sent to the token (50),
- actuating the locking means (30) by means of the control means (18) of the reader (10) under the condition that the identification of the token (50) was successful,
wherein the readers (10) are each assigned one of the symmetric keys (SK'), wherein each of the non-volatile, internal memories (54) of the tokens (50) stores the symmetric key (SK') of the reader (10) which is paired with the token (50),
wherein before the identification number (ID) and the first value (W) are sent from the reader (10) to the token (50) paired with the reader, the first value (W) is encrypted by the reader (10) by means of the processor (12) of the reader (10) with the symmetric key (SK') assigned to the reader (10),
wherein a shared, common secret is stored in the internal memory (14) of the reader (10) and in the non-volatile, internal memory (54) of the token (50), wherein the shared, common secret and the random number (RN) are jointly encrypted as a combined first value (W) and generate the return value (ENC(W, SK)).

12. A token (50) for access control of a group of persons by means of a plurality of readers (10) and a plurality of tokens (50),
wherein the token (50) comprises a processor (52), a non-volatile, internal memory (54) and a wireless communication interface (56) for wireless communication with a reader (10), wherein a symmetric key (SK) is stored in the non-volatile, internal memory (54) of the token (50), wherein the symmetric key (SK) is assigned to the token (50),
wherein the token (50) is paired with the readers (10), wherein the identification numbers (ID) of the readers (10) which are paired with the token (50) are stored in the non-volatile, internal memory (54) of the token (50), and wherein each of the internal memories (14) of the readers (10) stores the symmetric key (SK) of the token (50) which is paired with the respective reader (10),
wherein for pairing the token (50) with the reader (10) in a pairing process, the symmetric key (SK) that is assigned to the token (50), a symmetric key (SK') that is assigned to the reader (10), and the identification number (ID) of the reader (10) are exchanged between the reader (10) and the token (50), wherein the pairing process is initiated by the reader (10) or the token (50),
wherein the token (50) is configured to perform an access control method, wherein the method comprises authenticating the token (50) by one of the readers (10), wherein the token (50) is paired with the reader (10), wherein the authenticating comprises the following steps:
- coupling the token (50) into the wireless communication of the reader (10) and supplying the token (50) with an operating voltage for operating the processor (52) and the non-volatile, internal memory (54) by means of the wireless communication,
- receiving the identification number (ID) of the reader (10) and an encrypted first value (W) from the reader (10) by means of the wireless communication via the wireless communication interface (56) of the token (50), wherein the first value (W) comprises a random number (RN),
- identifying the reader (10) by the token (50) by means of the processor (52) of the token (50) using a comparison of the identification number (ID) of the reader (10) sent to the token (50) with the identification numbers (ID) of the readers (10), with which the token (50) is paired, stored in the non-volatile, internal memory (54) of the token (50),
- generating a return value (ENC(W, SK)) by the token (50), wherein the return value (ENC(W, SK)) comprises the first value (W) in encrypted form, wherein the encryption of the first value (W) is performed by the processor (52) of the token (50) with the symmetric key (SK) identifying the token (50) and the symmetric key (SK) is stored in the non-volatile, internal memory of the TK,
- sending the return value (ENC(W, SK)) from the token (50) to the reader (10) by means of wireless communication via the wireless communication interface (56) of the token (50) for identification of the token (50) by the reader (50) using the return value (ENC(W, SK)), wherein the reader (10) tries, one by one, the symmetric keys (SK) stored in the internal memory (14) of the reader (10) in order to decrypt the return value (ENC(W, SK)), until a decrypted return value (DEC(ENC(W, SK), SK)) corresponds to the first value (W) sent to the token (50),
wherein the readers (10) are each assigned one of the symmetric keys (SK'), wherein the symmetric keys (SK') of the readers (10) that are paired with the token (50) are respectively stored in the non-volatile, internal memory (54) of the token (50),
wherein the first value (W) received by the reader (10) is encrypted by the reader (10) with the symmetric key (SK') assigned to the reader (10), wherein the encrypted first value (W), after being received by the token (50), is decrypted by the token (50) with the symmetric key (SK') of the reader (10) assigned to the reader (10) and stored in the non-volatile, internal memory (54) of the token (50), wherein the first value (W) is decrypted by the processor (52) of the token (50),
wherein a shared, common secret is stored in the internal memory (14) of the reader (10) and in the non-volatile, internal memory (54) of the token (50), wherein the shared, common secret and the random number (RN) are jointly encrypted as a combined first value (W) by the processor (52) of the token (50) and generate the return value (ENC(W, SK)).

13. A system for access control of a group of persons by means of a plurality of readers (10) and a plurality of tokens (50),
wherein the readers (10) each have a processor (12), an internal memory (14), a wireless communication interface (16) for wireless communication with the tokens (50) and a control means (18) for actuating a locking means (30), wherein each reader (10) is assigned an identification number (ID) identifying the respective reader (10),
wherein the tokens (50) each have a processor (52), a non-volatile, internal memory (54) and a wireless communication interface (56) for wireless communication with the readers (10), wherein a symmetric key (SK) is stored in the non-volatile, internal memories (54) of the tokens (50) and is assigned to the respective token (50),
wherein the tokens (50) are paired with the readers (10), wherein the identification numbers (ID) of the readers (10) which are paired with the respective token (50) are respectively stored in the non-volatile, internal memories (54) of the tokens (50), and wherein the symmetric keys (SK) of the tokens (50) are respectively stored in the internal memories (14) of the readers (10), paired with the respective reader (10),
wherein for pairing the token (50) with the reader (10) in a pairing process, the symmetric key (SK) that is assigned to the token (50), a symmetric key (SK') that is assigned to the reader (10), and the identification number (ID) of the reader (10) are exchanged between the reader (10) and the token (50), wherein the pairing process is initiated by the reader (10) or the token (50),
wherein the system is configured to perform an access control method, wherein the method comprises authenticating one of the tokens (50) by one of the readers (10), wherein the reader (10) is paired with the token (50), wherein the authenticating comprises the following steps:
- recognising by the reader (10) that the token (50) is within wireless communication range of the reader (10),
- sending the identification number (ID) of the reader (10) and an encrypted first value (W) from the reader (10) to the token (50) by means of the wireless communication via the wireless communication interfaces (16, 56) of the reader (10) and the token (50), wherein the first value (W) comprises a random number (RN),
- identifying the reader (10) by the token (50) by means of the processor (52) of the token (50) using a comparison of the identification number (ID) of the reader (10) sent to the token (50) with the identification numbers (ID) of the readers (10), with which the token (50) is paired, stored in the non-volatile, internal memory (54) of the token (50),
- generating a return value (ENC(W, SK)) by the token (50), wherein the return value (ENC(W, SK)) comprises the first value (W) in encrypted form, wherein the encryption of the first value (W) is performed by the processor (52) of the token (50) with the symmetric key (SK) identifying the token (50) and the symmetric key (SK) is stored in the non-volatile, internal memory (54) of the token (50),
- sending the return value (ENC(W, SK)) from the token (50) to the reader (10) by means of wireless communication via the wireless communication interfaces (16, 56) of the reader (10) and the token (50),
- identifying the token (50) by the reader (50) using the return value (ENC(W, SK)) by the processor (12) of the reader,
wherein the reader (10) tries, one by one, the symmetric keys (SK) stored in the internal memory (14) of the reader (10) in order to decrypt the return value (ENC(W, SK)), wherein each symmetric key (SK) is in each case uniquely assigned to a token (50) paired with the reader (10), until a decrypted return value (DEC(ENC(W, SK), SK)) corresponds to the first value (W) sent to the token (50),
- actuating the locking means (30) by the reader (10) by means of the control means (18) of the reader (10) under the condition that the identification of the token (50) was successful,
wherein the readers (10) are each assigned one of the symmetric keys (SK'), wherein the symmetric keys (SK') of the readers (10), which are paired with the respective token (50), are respectively stored in the non-volatile, internal memories (54) of the tokens (50),
wherein before the identification number (ID) and the first value (W) are sent from the reader (10) to the token (50) paired with the reader, the first value (W) is encrypted by the reader (10) by means of the processor (12) of the reader (10) with the symmetric key (SK') assigned to the reader (10), wherein the encrypted first value (W), after being received by the token (50), is decrypted by the token (50) using the symmetric key (SK') of the reader (10) which is assigned to the reader (10) and stored in the non-volatile, internal memory (54) of the token (50), wherein the decryption of the first value (W) is performed by the processor (52) of the token (50),
wherein a shared, common secret is stored in the internal memory (14) of the reader (10) and in the non-volatile, internal memory (54) of the token (50), wherein the shared, common secret and the random number (RN) are jointly encrypted as a combined first value (W) by the processor (52) of the token (50) and generate the return value (ENC(W, SK)).

## Revendications

1. Procédé de contrôle d'accès d'un groupe de personnes au moyen d'une pluralité de lecteurs (10) et d'une pluralité de jetons (50),
dans lequel les lecteurs (10) ont chacun un processeur (12), une mémoire interne (14), une interface de communication sans fil (16) pour communication sans fil avec les jetons (50) et un moyen de contrôle (18) pour actionner un moyen de verrouillage (30), dans lequel chaque lecteur (10) se voit attribuer un numéro d'identification (ID) identifiant le lecteur (10) respectif,
dans lequel les jetons (50) ont chacun un processeur (52), une mémoire interne non volatile (54) et une interface de communication sans fil (56) pour communication sans fil avec les lecteurs (10), dans lequel une clé symétrique (SK) est stockée dans chacune des mémoires internes non volatiles (54) des jetons (50) et se voit attribuer au jeton (50) respectif,
dans lequel les jetons (50) sont appariés aux lecteurs (10), dans lequel les numéros d'identification (ID) des lecteurs (10) qui sont appariés au jeton (50) respectif sont respectivement stockés dans les mémoires internes non volatiles (54) des jetons (50), et dans lequel les clés symétriques (SK) des jetons (50) qui sont appariés au lecteur (10) respectif sont respectivement stockées dans les mémoires internes (14) des lecteurs (10),
dans lequel pour l'appariement du jeton (50) au lecteur (10) dans un processus d'appariement, la clé symétrique (SK) qui est attribuée au lecteur (10) et le numéro d'identification (ID) du lecteur (10) sont échangés entre le lecteur (10) et le jeton (50), dans lequel le processus d'appariement est initié par le lecteur (10) ou le jeton (50),
dans lequel le procédé de contrôle d'accès comprend l'authentification de l'un des jetons (50) par l'un des lecteurs (10), dans lequel le lecteur (10) est apparié au jeton (50), dans lequel l'authentification comprend les étapes suivantes consistant à :
- faire reconnaître par le lecteur (10) que le jeton (50) est à portée de communication sans fil du lecteur (10),
- envoyer le numéro d'identification (ID) du lecteur (10) et une première valeur chiffrée (W) depuis le lecteur (10) au jeton (50) au moyen de la communication sans fil par l'intermédiaire des interfaces de communication sans fil (16, 56) du lecteur (10) et du jeton (50), dans lequel la première valeur (W) comprend un nombre aléatoire (RN),
- faire identifier le lecteur (10) par le jeton (50) au moyen du processeur (52) du jeton (50) en utilisant une comparaison du numéro d'identification (ID) du lecteur (10) envoyé au jeton (50) avec les numéros d'identification (ID) des lecteurs (10), avec lesquels le jeton (50) est apparié, stockés dans la mémoire interne non volatile (54) du jeton (50),
- faire générer une valeur de retour (ENC(W, SK)) par le jeton (50), dans lequel la valeur de retour (ENC(W, SK)) comprend la première valeur (W) chiffrée, dans lequel le chiffrage de la première valeur (W) est réalisé par le processeur (52) du jeton (50) avec la clé symétrique (SK) identifiant le jeton (50) et la clé symétrique (SK) est stockée dans la mémoire interne non volatile (54) du jeton (50),
- faire envoyer la valeur de retour (ENC(W, SK)) depuis le jeton (50) au lecteur (10) au moyen d'une communication sans fil par l'intermédiaire des interfaces de communication sans fil (16, 56) du lecteur (10) et du jeton (50),
- faire identifier le jeton (50) par le lecteur (50) en faisant utiliser la valeur de retour (ENC(W, SK)) par le processeur (12) du lecteur, dans lequel le lecteur (10) essaie, une par une, les clés symétriques (SK) stockées dans la mémoire interne (14) du lecteur (10) afin de déchiffrer la valeur de retour (ENC(W, SK)), dans lequel chaque clé symétrique (SK) est dans chaque cas attribuée de manière unique à un jeton (50) apparié au lecteur (10), jusqu'à ce qu'une valeur de retour déchiffrée (DEC(ENC(W, SK), SK)) corresponde à la première valeur (W) envoyée au jeton (50),
- faire actionner le moyen de verrouillage (30) par le lecteur (10) au moyen du moyen de contrôle (18) du lecteur (10) à la condition que l'identification du jeton (50) soit réussie,
dans lequel les lecteurs (10) se voient chacun attribuer l'une des clés symétriques (SK'), dans lequel les clés symétriques (SK') des lecteurs (10), qui sont appariées au jeton (50) respectif, sont respectivement stockées dans les mémoires internes non volatiles (54) des jetons (50),
dans lequel avant que le numéro d'identification (ID) et la première valeur (W) soient envoyés depuis le lecteur (10) au jeton (50) apparié au lecteur, la première valeur (W) est chiffrée par le lecteur (10) au moyen du processeur (12) du lecteur (10) avec la clé symétrique (SK') attribuée au lecteur (10), dans lequel la première valeur chiffrée (W), après avoir été reçue par le jeton (50), est déchiffrée par le jeton (50) en utilisant la clé symétrique (SK') du lecteur (10) qui est attribuée au lecteur (10) et stockée dans la mémoire interne non volatile (54) du jeton (50), dans lequel le déchiffrage de la première valeur (W) est réalisé par le processeur (52) du jeton (50),
dans lequel un secret commun partagé est stocké dans la mémoire interne (14) du lecteur (10) et dans la mémoire interne non volatile (54) du jeton (50), dans lequel le secret commun partagé et le nombre aléatoire (RN) sont chiffrés conjointement en tant que première valeur combinée (W) par le processeur (52) du jeton (50) et génèrent la valeur de retour (ENC(W, SK)).

2. Procédé selon la revendication 1,
dans lequel des droits d'accès individuels sont attribués à chaque jeton (50),
dans lequel les droits d'accès sont stockés dans la mémoire interne non volatile (54) du jeton (50) et le jeton (50) envoie les droits d'accès sous forme chiffrée au lecteur (10), ou dans lequel les droits d'accès sont stockés dans la mémoire interne (14) du lecteur (10) ou dans une base de données (100) à laquelle le lecteur (10) est connecté en communication,
dans lequel le lecteur (10) vérifie les droits d'accès du jeton (50) avant d'actionner le moyen de verrouillage (30) au moyen du moyen de contrôle (18) du lecteur (10) et la vérification réussie des droits d'accès est un prérequis supplémentaire pour faire actionner le moyen de verrouillage (30) par le lecteur (10) au moyen du moyen de contrôle (18) du lecteur (10).

3. Procédé selon l'une quelconque des revendications précédentes, dans lequel une vérification réussie des caractéristiques biométriques du détenteur d'un jeton est un prérequis supplémentaire de l'actionnement du moyen de verrouillage (30) par le lecteur (10) au moyen du moyen de contrôle (18) du lecteur (10), dans lequel les caractéristiques biométriques du détenteur du jeton sont détectées par un moyen de capteur pour détecter des caractéristiques biométriques et la vérification est réalisée par une comparaison des caractéristiques biométriques stockées du détenteur du jeton avec les caractéristiques biométriques détectées, dans lequel
- le moyen de capteur pour détecter des caractéristiques biométriques est compris par le jeton (50), les caractéristiques biométriques stockées du détenteur du jeton sont stockées dans la mémoire interne non volatile (54) du jeton, et la comparaison des caractéristiques biométriques détectées aux caractéristiques biométriques stockées est réalisée par le processeur (52) du jeton (50), dans lequel le résultat de la vérification est envoyé chiffré au lecteur (10) au moyen de la communication sans fil ; ou
- le moyen de capteur pour détecter les caractéristiques biométriques est compris par le jeton (50), les caractéristiques biométriques stockées du détenteur du jeton sont stockées dans la mémoire interne (14) du lecteur (10) ou dans une base de données (100) à laquelle le lecteur (10) est connecté en communication, dans lequel les caractéristiques biométriques détectées sont envoyées sous forme chiffrée depuis le jeton (50) au lecteur (10) au moyen d'une communication sans fil et la comparaison des caractéristiques biométriques détectées aux caractéristiques biométriques stockées est mise en œuvre par le processeur (12) du lecteur (10) après que le jeton (50) a été identifié avec succès par le lecteur (10) ; ou
- le moyen de capteur pour détecter des caractéristiques biométriques est compris par le lecteur, les données biométriques stockées sont stockées dans la mémoire interne non volatile (54) du jeton (50), et la comparaison des caractéristiques biométriques détectées aux caractéristiques biométriques stockées est réalisée par le processeur (12) du lecteur (10), dans lequel les caractéristiques biométriques stockées sont envoyées sous forme chiffrée depuis le jeton (50) au lecteur (10) au moyen de la communication sans fil ; ou
- le moyen de capteur pour détecter des caractéristiques biométriques est compris par le lecteur, les caractéristiques biométriques stockées sont stockées dans la mémoire interne (14) du lecteur (10) ou dans une base de données (100) à laquelle le lecteur (10) est connecté en communication, et la comparaison des caractéristiques biométriques détectées aux caractéristiques biométriques stockées est réalisée par le processeur (12) du lecteur (10) après que le jeton (50) a été identifié avec succès par le lecteur (10).

4. Procédé selon l'une quelconque des revendications précédentes, dans lequel une vérification réussie d'un numéro d'identification individuel du détenteur du jeton est un prérequis supplémentaire de l'actionnement du moyen de verrouillage (30) par le lecteur (10) au moyen du moyen de contrôle (18) du lecteur (10), dans lequel le numéro d'identification individuel du détenteur du jeton est détecté par un moyen de capteur pour détecter des numéros d'identification et la vérification est réalisée par une comparaison d'un numéro d'identification individuel stocké du détenteur du jeton avec le numéro d'identification individuel détecté, dans lequel
- le moyen de capteur pour détecter les numéros d'identification est compris par le jeton (50), le numéro d'identification individuel stocké du détenteur du jeton est stocké dans la mémoire interne non volatile (54) du jeton, et la comparaison du numéro d'identification individuel détecté au numéro d'identification individuel stocké est réalisée par le processeur (52) du jeton (50), dans lequel le résultat de la vérification est envoyé sous forme chiffrée au lecteur (10) au moyen de la communication sans fil ; ou
- le moyen de capteur pour détecter les numéros d'identification est compris par le jeton (50), le numéro d'identification individuel stocké du détenteur du jeton est stocké dans la mémoire interne (14) du lecteur (10) ou dans une base de données (100) à laquelle le lecteur (10) est connecté en communication, dans lequel le numéro d'identification individuel détecté est envoyé sous forme chiffrée depuis le jeton (50) au lecteur (10) au moyen d'une communication sans fil et la comparaison du numéro d'identification individuel détecté au numéro d'identification individuel stocké est mise en œuvre par le processeur (12) du lecteur (10) après que le jeton (50) a été identifié avec succès par le lecteur (10) ; ou
- le moyen de capteur pour détecter des numéros d'identification est compris par le lecteur, le numéro d'identification individuel stocké est stocké dans la mémoire interne non volatile (54) du jeton (50), et la comparaison du numéro d'identification individuel détecté au numéro d'identification individuel stocké est réalisée par le processeur (12) du lecteur (10), dans lequel le numéro d'identification individuel stocké est envoyé sous forme chiffrée depuis le jeton (50) au lecteur (10) au moyen de la communication sans fil ; ou
- le moyen de capteur pour détecter des numéros d'identification est compris par le lecteur, le numéro d'identification individuel stocké est stocké dans la mémoire interne (14) du lecteur (10) ou dans une base de données (100) à laquelle le lecteur (10) est connecté, et la comparaison du numéro d'identification individuel détecté au numéro d'identification individuel stocké est réalisée par le processeur (12) du lecteur (10) après que le jeton (50) a été identifié avec succès par le lecteur (10).

5. Procédé selon l'une quelconque des revendications précédentes, dans lequel pour apparier le jeton (50) au lecteur (10) dans le processus d'appariement, le secret commun partagé entre le lecteur (10) et le jeton (50) est échangé entre le lecteur (10) et le jeton (50).

6. Procédé selon l'une quelconque des revendications précédentes, dans lequel la clé symétrique (SK) attribuée au jeton, la clé symétrique (SK') attribuée au lecteur, le numéro d'identification (ID) du lecteur (10) et/ou le secret commun partagé entre le lecteur (10) et le jeton (50) sont négociés dans le processus d'appariement au moyen de la communication sans fil et en utilisant des procédés cryptographiques asymétriques au moyen de la communication sans fil, et/ou
dans lequel le processus d'appariement du jeton (50) avec le lecteur (10) doit être réalisé à nouveau lorsqu'un temps fixé T s'est écoulé depuis l'appariement précédent et/ou un nombre fixé (n) de tentatives d'authentification a été réalisé avec les jetons (50).

7. Procédé selon l'une quelconque des revendications précédentes, dans lequel un ou plusieurs nombres aléatoires (RN) sont déterminés par le lecteur (10) dans une étape précédant l'envoi de la première valeur (W), et pour chaque jeton (50) apparié au lecteur (10) l'au moins une première valeur (W) est stockée sous forme chiffrée dans la mémoire interne (14) du lecteur (10), dans lequel chaque première valeur (W) comprend l'un des nombres aléatoires (RN).

8. Procédé selon la revendication 7, dans lequel la détermination du ou des nombres aléatoires (RN) et le stockage de l'au moins une première valeur chiffrée (W) pour chaque jeton (50) apparié au lecteur (10) dans la mémoire interne (14) du lecteur (10) se déroule dans un intervalle de temps fixé et/ou à un temps auquel aucune tentative d'authentification n'est réalisée.

9. Procédé selon l'une quelconque des revendications précédentes, dans lequel le lecteur (10) utilise le nombre aléatoire (RN) pour le procédé de contrôle d'accès, jusqu'à ce que le même nombre aléatoire (RN) soit utilisé une deuxième fois pour l'identification du jeton (50) et/ou jusqu'à ce que tous les jetons (50) appariés au lecteur (10) aient utilisé ce nombre aléatoire (RN) pour une tentative d'authentification et/ou jusqu'à ce qu'un temps (T') se soit écoulé et/ou jusqu'à ce qu'un nombre prédéterminé (n') de tentatives d'authentification ait été mis en œuvre avec le nombre aléatoire (RN) puis qu'un nouveau nombre aléatoire (RN) soit utilisé pour le procédé de contrôle d'accès.

10. Procédé selon la revendication 9, dans lequel si le même nombre aléatoire (RN) est utilisé pour l'identification du jeton (50) pour la deuxième fois, l'identification du jeton (50) est répétée avec le nouveau nombre aléatoire (RN).

11. Lecteur (10) destiné au contrôle d'accès d'un groupe de personnes au moyen d'une pluralité de jetons (50),
dans lequel le lecteur (10) comprend un processeur (12), une mémoire interne (14), une interface de communication sans fil (16) pour communication sans fil avec les jetons (50) et un moyen de contrôle (18) pour actionner un moyen de verrouillage (30), dans lequel le lecteur (10) se voit attribuer un numéro d'identification (ID) identifiant le lecteur (10),
dans lequel les jetons (50) sont appariés au lecteur (10), dans lequel le numéro d'identification (ID) du lecteur (10) apparié au jeton (50) respectif est respectivement stocké dans les mémoires internes non volatiles (54) des jetons (50), et dans lequel les clés symétriques (SK) des jetons (50) appariés au lecteur (10) sont stockées dans la mémoire interne (14) du lecteur (10),
dans lequel pour l'appariement du jeton (50) au lecteur (10) dans un processus d'appariement, la clé symétrique (SK) qui est attribuée au jeton (50), une clé symétrique (SK') qui est attribuée au lecteur (10), et le numéro d'identification (ID) du lecteur (10) sont échangés entre le lecteur (10) et le jeton (50), dans lequel le processus d'appariement est initié par le lecteur (10) ou le jeton (50),
dans lequel le lecteur (10) est conçu pour réaliser un procédé de contrôle d'accès comprenant l'authentification de l'un des jetons (50) par le lecteur (10), dans lequel le jeton (10) est apparié au lecteur (50), dans lequel l'authentification comprend les étapes suivantes consistant à :
- faire reconnaître que le jeton (50) est à portée de communication sans fil du lecteur (10),
- envoyer le numéro d'identification (ID) du lecteur (10) et une première valeur chiffrée (W) au jeton (50) au moyen de la communication sans fil par l'intermédiaire de l'interface de communication sans fil (16) du lecteur (10), dans lequel la première valeur (W) comprend un nombre aléatoire (RN),
- recevoir une valeur de retour (ENC(W, SK)), chiffrée avec la clé symétrique (SK) du jeton (50), depuis le jeton (50) au moyen de la communication sans fil par l'intermédiaire de l'interface de communication sans fil (16) du lecteur (10), dans lequel la valeur de retour (ENC(W, SK)) comprend la première valeur (W) sous forme chiffrée,
- identifier le jeton (50) en utilisant la valeur de retour (ENC(W, SK)) par le processeur (12) du lecteur (10),
dans lequel le lecteur (10) essaie, une par une, les clés symétriques (SK) stockées dans la mémoire interne (14) du lecteur (10) afin de déchiffrer la valeur de retour (ENC(W, SK)), dans lequel chaque clé symétrique (SK) est dans chaque cas attribuée de manière unique à un jeton (50) apparié au lecteur (10), jusqu'à ce qu'une valeur de retour déchiffrée (DEC(ENC(W, SK), SK)) corresponde à la première valeur (W) envoyée au jeton (50),
- faire actionner le moyen de verrouillage (30) au moyen du moyen de contrôle (18) du lecteur (10) à la condition que l'identification du jeton (50) ait été réussie,
dans lequel les lecteurs (10) se voient chacun attribuer l'une des clés symétriques (SK'), dans lequel chacune des mémoires internes non volatiles (54) des jetons (50) stocke la clé symétrique (SK') du lecteur (10) qui est apparié au jeton (50),
dans lequel avant que le numéro d'identification (ID) et la première valeur (W) soient envoyés depuis le lecteur (10) au jeton (50) apparié au lecteur, la première valeur (W) est chiffrée par le lecteur (10) au moyen du processeur (12) du lecteur (10) avec la clé symétrique (SK') attribuée au lecteur (10),
dans lequel un secret commun partagé est stocké dans la mémoire interne (14) du lecteur (10) et dans la mémoire interne non volatile (54) du jeton (50), dans lequel le secret commun partagé et le nombre aléatoire (RN) sont chiffrés conjointement en tant que première valeur combinée (W) et génèrent la valeur de retour (ENC(W, SK)).

12. Jeton (50) destiné au contrôle d'accès d'un groupe de personnes au moyen d'une pluralité de lecteurs (10) et d'une pluralité de jetons (50),
dans lequel le jeton (50) comprend un processeur (52), une mémoire interne non volatile (54) et une interface de communication sans fil (56) pour communication sans fil avec un lecteur (10), dans lequel une clé symétrique (SK) est stockée dans la mémoire interne non volatile (54) du jeton (50), dans lequel la clé symétrique (SK) est attribuée au jeton (50),
dans lequel le jeton (50) est apparié aux lecteurs (10), dans lequel les numéros d'identification (ID) des lecteurs (10) qui sont appariés au jeton (50) sont stockés dans la mémoire interne non volatile (54) du jeton (50), et dans lequel chacune des mémoires internes (14) des lecteurs (10) stocke la clé symétrique (SK) du jeton (50) qui est apparié au lecteur (10) respectif,
dans lequel pour l'appariement du jeton (50) au lecteur (10) dans un processus d'appariement, la clé symétrique (SK) qui est attribuée au jeton (50), une clé symétrique (SK') qui est attribuée au lecteur (10), et le numéro d'identification (ID) du lecteur (10) sont échangés entre le lecteur (10) et le jeton (50), dans lequel le processus d'appariement est initié par le lecteur (10) ou le jeton (50),
dans lequel le jeton (50) est conçu pour réaliser un procédé de contrôle d'accès, dans lequel le procédé comprend l'authentification du jeton (50) par l'un des lecteurs (10), dans lequel le jeton (50) est apparié au lecteur (10), dans lequel l'authentification comprend les étapes suivantes consistant à :
- coupler le jeton (50) dans la communication sans fil du lecteur (10) et fournir au jeton (50) une tension de fonctionnement pour faire fonctionner le processeur (52) et la mémoire interne non volatile (54) au moyen de la communication sans fil,
- recevoir le numéro d'identification (ID) du lecteur (10) et une première valeur chiffrée (W) depuis le jeton (10) au moyen de la communication sans fil par l'intermédiaire de l'interface de communication sans fil (56) du jeton (50), dans lequel la première valeur (W) comprend un nombre aléatoire (RN),
- faire identifier le lecteur (10) par le jeton (50) au moyen du processeur (52) du jeton (50) en utilisant une comparaison du numéro
d'identification (ID) du lecteur (10) envoyé au jeton (50) avec les numéros d'identification (ID) des lecteurs (10), avec lesquels le jeton (50) est apparié, stockés dans la mémoire interne non volatile (54) du jeton (50),
- faire générer une valeur de retour (ENC(W, SK)) par le jeton (50), dans lequel la valeur de retour (ENC(W, SK)) comprend la première valeur (W) sous forme chiffrée, dans lequel le chiffrage de la première valeur (W) est réalisé par le processeur (52) du jeton (50) avec la clé symétrique (SK) identifiant le jeton (50) et la clé symétrique (SK) est stockée dans la mémoire interne non volatile du jeton,
- envoyer la valeur de retour (ENC(W, SK)) depuis le jeton (50) au lecteur (10) au moyen d'une communication sans fil par l'intermédiaire de l'interface de communication sans fil (56) du jeton (50) pour l'identification du jeton (50) par le lecteur (50) en utilisant la valeur de retour (ENC(W, SK)), dans lequel le lecteur (10) essaie, une par une, les clés symétriques (SK) stockées dans la mémoire interne (14) du lecteur (10) afin de déchiffrer la valeur de retour (ENC(W, SK)), jusqu'à ce qu'une valeur de retour déchiffrée (DEC(ENC(W, SK), SK)) corresponde à la première valeur (W) envoyée au jeton (50),
dans lequel les lecteurs (10) se voient chacun attribuer l'une des clés symétriques (SK'), dans lequel les clés symétriques (SK') des lecteurs (10), qui sont appariées au jeton (50) sont respectivement stockées dans la mémoire interne non volatile (54) du jeton (50),
dans lequel la première valeur (W) reçue par le lecteur (10) est chiffrée par le lecteur (10) avec la clé symétrique (SK') attribuée au lecteur (10), dans lequel la première valeur chiffrée (W), après avoir été reçue par le jeton (50), est déchiffrée par le jeton (50) avec la clé symétrique (SK') du lecteur (10) attribuée au lecteur (10) et stockée dans la mémoire interne non volatile (54) du jeton (50), dans lequel la première valeur (W) est déchiffrée par le processeur (52) du jeton (50),
dans lequel un secret commun partagé est stocké dans la mémoire interne (14) du lecteur (10) et dans la mémoire interne non volatile (54) du jeton (50), dans lequel le secret commun partagé et le nombre aléatoire (RN) sont chiffrés conjointement en tant que première valeur combinée (W) par le processeur (52) du jeton (50) et génèrent la valeur de retour (ENC(W, SK)).

13. Système de contrôle d'accès d'un groupe de personnes au moyen d'une pluralité de lecteurs (10) et d'une pluralité de jetons (50),
dans lequel les lecteurs (10) ont chacun un processeur (12), une mémoire interne (14), une interface de communication sans fil (16) pour communication sans fil avec les jetons (50) et un moyen de contrôle (18) pour actionner un moyen de verrouillage (30), dans lequel chaque lecteur (10) se voit attribuer un numéro d'identification (ID) identifiant le lecteur (10) respectif,
dans lequel les jetons (50) ont chacun un processeur (52), une mémoire interne non volatile (54) et une interface de communication sans fil (56) pour communication sans fil avec les lecteurs (10), dans lequel une clé symétrique (SK) est stockée dans les mémoires internes non volatiles (54) des jetons (50) et se voit attribuer au jeton (50) respectif,
dans lequel les jetons (50) sont appariés aux lecteurs (10), dans lequel les numéros d'identification (ID) des lecteurs (10) qui sont appariés au jeton (50) respectif sont respectivement stockés dans les mémoires internes non volatiles (54) des jetons (50), et dans lequel les clés symétriques (SK) des jetons (50) sont respectivement stockées dans les mémoires internes (14) des lecteurs (10), appariées au lecteur (10) respectif,
dans lequel pour l'appariement du jeton (50) au lecteur (10) dans un processus d'appariement, la clé symétrique (SK) qui est attribuée au jeton (50), une clé symétrique (SK') qui est attribuée au lecteur (10), et le numéro d'identification (ID) du lecteur (10) sont échangés entre le lecteur (10) et le jeton (50), dans lequel le processus d'appariement est initié par le lecteur (10) ou le jeton (50),
dans lequel le système est conçu pour réaliser un procédé de contrôle d'accès, dans lequel le procédé comprend l'authentification de l'un des jetons (50) par l'un des lecteurs (10), dans lequel le lecteur (10) est apparié au jeton (50), dans lequel l'authentification comprend les étapes suivantes consistant à :
- faire reconnaître par le lecteur (10) que le jeton (50) est à portée de communication sans fil du lecteur (10),
- envoyer le numéro d'identification (ID) du lecteur (10) et une première valeur chiffrée (W) depuis le lecteur (10) au jeton (50) au moyen de la communication sans fil par l'intermédiaire des interfaces de communication sans fil (16, 56) du lecteur (10) et du jeton (50), dans lequel la première valeur (W) comprend un nombre aléatoire (RN),
- faire identifier le lecteur (10) par le jeton (50) au moyen du processeur (52) du jeton (50) en utilisant une comparaison du numéro d'identification (ID) du lecteur (10) envoyé au jeton (50) avec les numéros d'identification (ID) des lecteurs (10), avec lesquels le jeton (50) est apparié, stockés dans la mémoire interne non volatile (54) du jeton (50),
- faire générer une valeur de retour (ENC(W, SK)) par le jeton (50), dans lequel la valeur de retour (ENC(W, SK)) comprend la première valeur (W) sous forme chiffrée, dans lequel le chiffrage de la première valeur (W) est réalisé par le processeur (52) du jeton (50) avec la clé symétrique (SK) identifiant le jeton (50) et la clé symétrique (SK) est stockée dans la mémoire interne non volatile (54) du jeton (50),
- faire envoyer la valeur de retour (ENC(W, SK)) depuis le jeton (50) au lecteur (10) au moyen d'une communication sans fil par l'intermédiaire des interfaces de communication sans fil (16, 56) du lecteur (10) et du jeton (50),
- faire identifier le jeton (50) par le lecteur (50) en faisant utiliser la valeur de retour (ENC(W, SK)) par le processeur (12) du lecteur,
dans lequel le lecteur (10) essaie, une par une, les clés symétriques (SK) stockées dans la mémoire interne (14) du lecteur (10) afin de déchiffrer la valeur de retour (ENC(W, SK)), dans lequel chaque clé symétrique (SK) est dans chaque cas attribuée de manière unique à un jeton (50) apparié au lecteur (10), jusqu'à ce qu'une valeur de retour déchiffrée (DEC(ENC(W, SK), SK)) corresponde à la première valeur (W) envoyée au jeton (50),
- faire actionner le moyen de verrouillage (30) par le lecteur (10) au moyen du moyen de contrôle (18) du lecteur (10) à la condition que l'identification du jeton (50) soit réussie,
dans lequel les lecteurs (10) se voient chacun attribuer l'une des clés symétriques (SK'), dans lequel les clés symétriques (SK') des lecteurs (10), qui sont appariées au jeton (50) respectif, sont respectivement stockées dans les mémoires internes non volatiles (54) des jetons (50),
dans lequel avant que le numéro d'identification (ID) et la première valeur (W) soient envoyés depuis le lecteur (10) au jeton (50) apparié au lecteur, la première valeur (W) est chiffrée par le lecteur (10) au moyen du processeur (12) du lecteur (10) avec la clé symétrique (SK') attribuée au lecteur (10), dans lequel la première valeur chiffrée (W), après avoir été reçue par le jeton (50), est déchiffrée par le jeton (50) en utilisant la clé symétrique (SK') du lecteur (10) qui est attribuée au lecteur (10) et stockée dans la mémoire interne non volatile (54) du jeton (50), dans lequel le déchiffrage de la première valeur (W) est réalisé par le processeur (52) du jeton (50),
dans lequel un secret commun partagé est stocké dans la mémoire interne (14) du lecteur (10) et dans la mémoire interne non volatile (54) du jeton (50), dans lequel le secret commun partagé et le nombre aléatoire (RN) sont chiffrés conjointement en tant que première valeur combinée (W) par le processeur (52) du jeton (50) et génèrent la valeur de retour (ENC(W, SK)).
